# EUROPEAN PATENT APPLICATION

(11) **EP 2 801 946 A1**
(43) Date of publication of application: **12.11.2014**
(21) Application number: 13730788.0
(22) Date of filing: 18.02.2013
(51) Int. Cl.: G06Q 30/06, H04W 4/00, G06F 3/048

(54) **METHOD FOR PROVIDING SHOPPING INFORMATION USING MOBILE TERMINAL, AND USER INTERFACE FOR PROVIDING SHOPPING INFORMATION USING MOBILE TERMINAL**

(30) Priority: 21.01.2013 KR 20130006728; 07.02.2013 US 201361762255 P
(71) Applicant: Brinicle Inc., Seoul 135-830 (KR)
(72) Inventor: AN, Chongoh, Seoul 137-814 (KR)
(74) Representative: Regimbeau
(86) International application number: PCT/KR2013/001257
(87) International publication number: WO 2014/112678

(57) **Abstract**

The present disclosure relates to a method of providing shopping information using a mobile terminal capable of providing shopping information on a home screen page and a user interface for providing shopping information using the mobile terminal. A method of providing shopping information using a mobile terminal according to an embodiment of the present disclosure may include receiving shopping information using a wireless communication unit, displaying first shopping information corresponding to at least part of the shopping information on a first home screen page displayed on a display unit, outputting detailed information corresponding to at least part of the first shopping information or switching the first home screen page displayed on the display unit to a second home screen page different from the first home screen page according to the scheme of a touch input to the display unit, and outputting either one of user setting information on the second home screen page and second shopping information corresponding to at least part of the shopping information and different from the first shopping information on the second home screen page.

## Description

### BACKGROUND OF THE INVENTION

### 1. Field of the invention

The present disclosure relates to a method of providing shopping information using a mobile terminal capable of providing shopping information on a home screen page and a user interface for providing shopping information using the mobile terminal.

### 2. Description of the related art

In recent years, as the functions of a smart phone, namely, mobile terminal, have become diversified, the terminal can be allowed to capture still images or moving images, play music or video files, play games, receive broadcast and the like, and thus implemented as an integrated multimedia player.

Furthermore, applications capable of performing various functions may be installed in the mobile terminal, and thus the user can install or delete applications corresponding to various functions as the need arises.

On the other hand, a home screen page may be provided in the mobile terminal to approach the applications, thereby helping the user efficiently perform the functions of the mobile terminal.

### SUMMARY OF THE INVENTION

An object of the present disclosure is to provide a method of providing shopping information using a mobile terminal capable of providing shopping information on a home screen page and a user interface for providing shopping information using the mobile terminal.

A method of providing shopping information using a mobile terminal according to an embodiment of the present disclosure may include receiving shopping information using a wireless communication unit, displaying first shopping information corresponding to at least part of the shopping information on a first home screen page displayed on a display unit, outputting detailed information corresponding to at least part of the first shopping information or switching the first home screen page displayed on the display unit to a second home screen page different from the first home screen page according to the scheme of a touch input to the display unit, and outputting either one of user setting information on the second home screen page and second shopping information corresponding to at least part of the shopping information and different from the first shopping information on the second home screen page.

According to an embodiment, the first shopping information may include at least one shopping information, and the first home screen page may include at least one item to display the at least one shopping information, and the at least one shopping information may be disposed to correspond to the at least one item, respectively.

According to an embodiment, the number of items contained in the first home screen page may be changed according to the number of product information contained in the first shopping information.

According to an embodiment, the size of items contained in the first home screen page may vary based on the priority of product information to be disposed at the item.

According to an embodiment, information associated with the priority of product information to be disposed at the item contained in the first home screen page may be contained in shopping information received using the wireless communication unit.

According to an embodiment, event information contained in shopping information sequentially or simultaneously received through the wireless communication unit may be overlapped with at least one of the at least one item.

According to an embodiment, a plurality of function icons corresponding to different functions, respectively, may be displayed on the first home screen page, and a function corresponding to any one of the plurality of function icons may be implemented based on any one of the plurality of function icons being moved to any one of the at least one item or any one of the at least one item being moved to any one of the plurality of function icons.

According to an embodiment, shopping information received using the wireless communication unit may include at least one of product information, the layout information of the product information, the priority information of the product information, and event information corresponding to the product information, and the shopping information may be received from a preset external server through the wireless communication unit.

According to an embodiment, the detailed information of the product information disposed at the any item may be displayed when a touch input in a preset scheme is applied to any one of the at least one item contained in the first home screen page, and the detailed information may include at least one detailed item that can be selected associated with the product information.

According to an embodiment, the detailed information may include a settlement function icon capable of purchasing a product corresponding to the product information, and detailed information corresponding to a detailed item selected by the user among the at least one detailed item may be transmitted to a preset external server when the settlement function icon is selected.

According to an embodiment, when a touch input in a preset scheme is applied to any one of the at least one item contained in the first home screen page, at least one of at least one share function icon corresponding to a function of transmitting product information disposed at the any item to an external terminal and a shopping basket function icon for allowing product information disposed at the any item to be contained in a shopping basket database may be output.

According to an embodiment, the first home screen page may be any one of a plurality of home screen pages, and a plurality of objects corresponding to the plurality of home screen pages, respectively, for allowing the plurality of home screen pages to be identified may be displayed on the first home screen page, and a plurality of thumbnail images corresponding to the plurality of home screen pages, respectively, may be displayed when a touch input in a preset scheme is applied to any one of the plurality of objects.

According to an embodiment, the plurality of thumbnail images may correspond to any one of representative product information, category information and shopping mall information of the plurality of home screen pages.

According to an embodiment, the first home screen page may be any one of a plurality of home screen pages, and the plurality of home screen pages may form a matrix structure consisting of at least one row and column.

According to an embodiment, information corresponding to the same attribute may be displayed on at least one home screen page corresponding to the same column.

According to an embodiment, the second home screen page may be switched to a third home screen page, and user setting information different from user setting information displayed on the second home screen page may be contained on the third home screen page when a touch input for moving the second home screen page in the column direction is applied in a state that user setting information is displayed on the second home screen page , and the second home screen page may be switched to a third home screen page, and third shopping information different from second shopping information displayed on the second home screen page may be contained on the third home screen page when a touch input for moving the second home screen page in the column direction is applied in a state that second shopping information is displayed on the second home screen page.

According to an embodiment, shopping information with different attributes may be contained in home screen pages corresponding to different columns when home screen pages containing shopping information form a plurality of columns in the matrix structure.

According to an embodiment, the shopping information with different attributes may be associated with at least one of the shopping mall and product category.

According to an embodiment, the foregoing method may further include implementing a lock state for restricting the input of a control command to the display unit, wherein at least one product information is displayed on a lock screen displayed in the lock state based on shopping information received using the wireless communication unit.

A user interface for providing shopping information using a mobile terminal, the user interface according to an embodiment of the present disclosure may include a wireless communication unit configured to communicate with an external server providing shopping information, a display unit formed to display visual screen information, and a controller configured to control the display unit to contain shopping information corresponding to at least part of the shopping information on a home screen page displayed on the display unit among a plurality of home screen pages, wherein shopping information and the number thereof contained in the plurality of home screen pages are controlled based on the shopping information.

A user interface for providing shopping information using a mobile terminal according to an embodiment of the present disclosure may include a wireless communication unit configured to communicate with an external server providing shopping information, a display unit formed to display visual screen information, and a controller configured to control the display unit to contain first shopping information corresponding to at least part of the shopping information on a first home screen page displayed on the display unit, wherein the controller controls the display unit to switch a first home screen page displayed on the display unit to a second home screen page different from the first home screen page according to the scheme of a touch input to the display unit, and display either one of user setting information on the second home screen page and second shopping information corresponding to at least part of the shopping information and different from the first shopping information on the second home screen page.

According to an embodiment, the user setting information may include a graphic object corresponding to at least one of the icon and widget of an application selected by the user.

According to an embodiment, the layout of the first and the second shopping information contained in the first and the second home screen page, respectively, may be not changed in response to the user's control command.

According to an embodiment, the controller may control the shopping information being received based on at least one of the wireless communication status and charge information of the mobile terminal.

According to an embodiment, the foregoing user interface may further include a monitoring unit configured to monitor use information associated with the use of the mobile terminal, wherein the controller controls the wireless communication unit to transmit information monitored through the monitoring unit to an external server transmitting the shopping information.

According to an embodiment, the use information may include at least one of time information during which the mobile terminal is mainly used and product information selected by the user from the first and the second shopping information.

A method of providing shopping information using a mobile terminal according to an embodiment of the present disclosure and a user interface for providing shopping information using the mobile terminal may provide shopping information received from an external server on a home screen page. Accordingly, the user may reduce burdensomeness, such as implementing an additional application or accessing the Internet to use shopping information.

Furthermore, a method of providing shopping information using a mobile terminal according to an embodiment of the present disclosure and a user interface for providing shopping information using the mobile terminal may provide a function of directly purchasing a product through a home screen page, thereby enhancing the convenience of the user's shopping method.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a mobile terminal to which a method of providing shopping information using a mobile terminal according to an embodiment of the present disclosure and a user interface for providing shopping information using the mobile terminal are applied;
FIGS. 2A and 2B are perspective views illustrating an example of a mobile terminal to which a method of providing shopping information using a mobile terminal according to an embodiment of the present disclosure and a user interface for providing shopping information using the mobile terminal are applied;
FIGS. 3A, 3B and 3C are conceptual views for explaining a method of switching a home screen page and a page displayed on the display unit to another page in a mobile terminal to which a method of providing shopping information using a mobile terminal according to an embodiment of the present disclosure and a user interface for providing shopping information using the mobile terminal are applied;
FIG. 4A is a block diagram for explaining a user interface for providing shopping information using a mobile terminal according to an embodiment of the present disclosure;
FIG. 4B is a block diagram for explaining a shopping information providing server for providing shopping information;
FIG. 5 is a flow chart for explaining a method of providing shopping information using a mobile terminal according to an embodiment of the present disclosure;
FIGS. 6A and 6B are conceptual views for explaining the flow chart of the FIG. 5.
FIGS. 7A, 7B, 7C and 7D are conceptual views for explaining a method of providing shopping information on a home screen page;
FIGS. 8A, 8B and 8C are conceptual views for explaining the structure of a home screen page;
FIGS. 9A, 9B and 9C are conceptual views for explaining a method of providing an additional function for product information displayed on a home screen page;
FIG. 10 is a conceptual view for explaining a method of providing a convenience function associated with a shopping function on a home screen page;
FIGS. 11A, 11B and 11C are conceptual views for explaining a method of using a function icon to provide a shopping function on a home screen page; and
FIG. 12 is a conceptual view for explaining a method of providing shopping information in a lock state.

### DETAILED DESCRIPTION OF THE INVENTION

Hereinafter, the embodiments disclosed herein will be described in detail with reference to the accompanying drawings, and the same or similar elements are designated with the same numeral references regardless of the numerals in the drawings and their redundant description will be omitted. A suffix "module" or "unit" used for constituent elements disclosed in the following description is merely intended for easy description of the specification, and the suffix itself does not give any special meaning or function. In describing the embodiments disclosed herein, moreover, the detailed description will be omitted when a specific description for publicly known technologies to which the invention pertains is judged to obscure the gist of the present invention. Also, it should be noted that the accompanying drawings are merely illustrated to easily explain the spirit of the invention, and therefore, they should not be construed to limit the technological spirit disclosed herein by the accompanying drawings.

A mobile terminal disclosed herein may include a portable phone, a smart phone, a laptop computer, a digital broadcast terminal, a personal digital assistant (PDA), a portable multimedia player (PMP), a navigation, a slate PC, a tablet PC, an ultra book and the like. However, it would be easily understood by those skilled in the art that a configuration according to the following description may be applicable to a stationary terminal such as a digital TV, a desktop computer, and the like, excluding constituent elements particularly configured for mobile purposes.

The present disclosure relates to a method of providing shopping information using a mobile terminal capable of providing shopping information on a home screen page and a user interface for providing shopping information using the mobile terminal, and the function will be provided using a mobile terminal which will be described later. Accordingly, first, a mobile terminal to which a method of providing shopping information using a mobile terminal capable of providing shopping information on a home screen page and a user interface for providing shopping information using the mobile terminal are applied will be described in more detail with reference to the accompanying drawings.

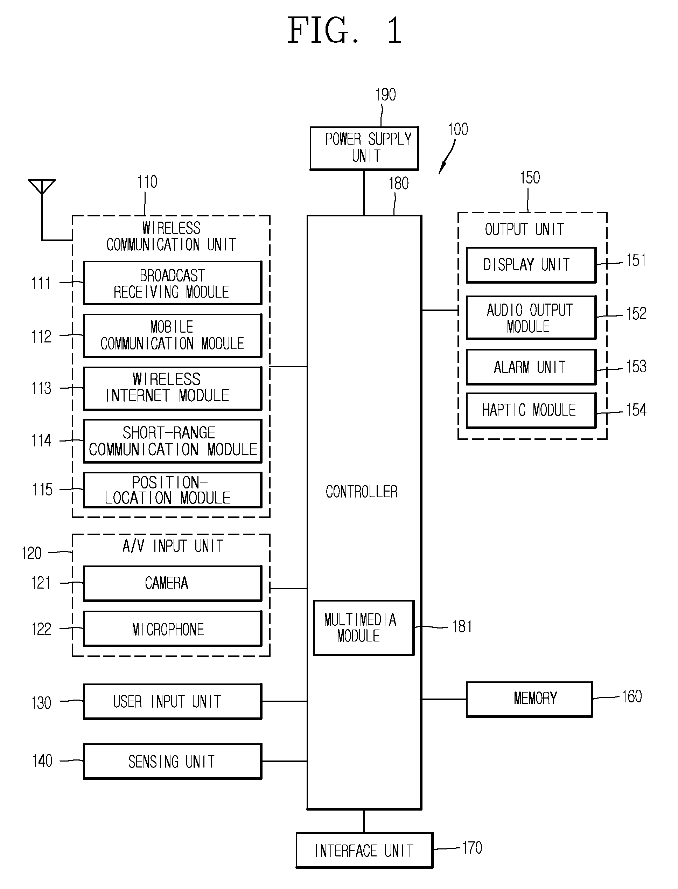

FIG. 1 is a block diagram illustrating a mobile terminal to which a method of providing shopping information using a mobile terminal according to an embodiment of the present disclosure and a user interface for providing shopping information using the mobile terminal are applied.

The mobile terminal 100 may include a wireless communication unit 110, an audio/video (A/V) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile terminal may be implemented with greater or less number of elements than those illustrated elements.

Hereinafter, the constituent elements will be described in sequence.

The wireless communication unit 110 typically includes one or more elements allowing radio communication between the mobile terminal 100 and a wireless communication system, or allowing radio communication between radio communication the mobile terminal 100 and a network in which the mobile terminal 100 is located. For example, the wireless communication unit 110 may include a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel.

The broadcast channel may include a satellite channel and/or a terrestrial channel. The broadcast management server may mean a server that generates and transmits a broadcast signal and/or broadcast associated information or a server that receives a previously generated broadcast signal and/or broadcast associated information and transmits to the mobile terminal 100. The broadcast signal may include a TV broadcast signal, a radio broadcast signal and a data broadcast signal as well as a broadcast signal in a form that a data broadcast signal is coupled to the TV or radio broadcast signal.

The broadcast associated information may mean information regarding a broadcast channel, a broadcast program, a broadcast service provider, and the like. The broadcast associated information may also be provided through a mobile communication network, and in this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may receive a broadcast signal using various types of broadcast systems. In particular, the broadcast receiving module 111 may receive a digital broadcast signal using a digital broadcast system such as digital multimedia broadcasting-terrestrial (DMB-T), digital multimedia broadcasting-satellite (DMB-S), media forward link only (MediaFLO), digital video broadcast-handheld (DVB-H), integrated services digital broadcast-terrestrial (ISDB-T), and the like. The broadcast receiving module 111 is, of course, configured to be suitable for every broadcast system that provides a broadcast signal as well as the above-mentioned digital broadcast systems.

The broadcast signal and/or broadcast-associated information received through the broadcast receiving module 111 may be stored in the memory 160.

The mobile communication module 112 transmits and/or receives a radio signal to and/or from at least one of a base station, an external terminal and a server over a mobile communication network. Here, the radio signal may include a voice call signal, a video call signal and/or various types of data according to text and/or multimedia message transmission and/or reception.

The mobile communication module 112 may be configured to implement an video communication mode and a voice communication mode. The video communication mode refers to a configuration in which communication is made while viewing an image of the counterpart, and the voice communication mode refers to a configuration in which communication is made without viewing an image of the counterpart. The mobile communication module 112 may be configured to transmit or receive at least one of voice or image data to implement the video communication mode and voice communication mode.

The wireless Internet module 113 means a module for supporting wireless Internet access. The wireless Internet module 113 may be built-in or externally installed to the mobile terminal 100. Here, it may be used a wireless Internet access technique including a WLAN (Wireless LAN), Wi-Fi, Wibro (Wireless Broadband), Wimax (World Interoperability for Microwave Access), HSDPA (High Speed Downlink Packet Access), and the like.

The short-range communication module 114 is a module for supporting a short-range communication. Here, it may be used a short-range communication technology including Bluetooth, Radio Frequency IDentification (RFID), Infrared Data Association (IrDA), Ultra WideBand (UWB), ZigBee, and the like.

The location information module 115 is a module for checking or acquiring a location of the mobile terminal, and there is a GPS module as a representative example.

Referring to FIG. 1, the A/V(audio/video) input unit 120 receives an audio or video signal, and the A/V (audio/video) input unit 120 may include a camera 121 and a microphone 122. The camera 121 processes a image frame, such as still picture or video, obtained by an image sensor in a video phone call or image capturing mode. The processed image frame may be displayed on a display unit 151.

The image frames processed by the camera 121 may be stored in the memory 160 or transmitted to an external device through the wireless communication unit 110. Two or more cameras 121 may be provided according to the use environment of the mobile terminal.

The microphone 122 receives an external audio signal through a microphone in a phone call mode, a recording mode, a voice recognition mode, and the like, and processes the audio signal into electrical voice data. The processed voice data may be converted and outputted into a format that is transmittable to a mobile communication base station through the mobile communication module 112 in the phone call mode. The microphone 122 may implement various types of noise canceling algorithms to cancel noise generated in a procedure of receiving the external audio signal.

The user input unit 130 may generate input data to control an operation of the terminal. The user input unit 130 may be configured by including a keypad, a dome switch, a touch pad (pressure/capacitance), a jog wheel, a jog switch, and the like.

The sensing unit 140 detects a current status of the mobile terminal 100 such as an opened or closed state of the mobile terminal 100, a location of the mobile terminal 100, an orientation of the mobile terminal 100, and the like, and generates a sensing signal for controlling the operation of the mobile terminal 100. For example, when the mobile terminal 100 is a slide phone type, it may sense an opened or closed state of the slide phone. Furthermore, the sensing unit 140 takes charge of a sensing function associated with whether or not power is supplied from the power supply unit 190, or whether or not an external device is coupled to the interface unit 170.

The output unit 150 is configured to provide an output for audio signal, video signal, or alarm signal, and the output unit 150 may include the display unit 151, an audio output module 152, an alarm unit 153, a haptic module 154, and the like.

The display unit 151 may display (output) information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of those displays may be configured with a transparent or optical transparent type to allow viewing of the exterior through the display unit, which may be called transparent displays. An example of the typical transparent displays may include a transparent LCD (TOLED), and the like. Under this configuration, a user can view an object positioned at a rear side of a terminal body through a region occupied by the display unit 151 of the terminal body.

Two or more display units 151 may be implemented according to a configured aspect of the mobile terminal 100. For instance, a plurality of the display units 151 may be arranged on one surface to be spaced apart from or integrated with each other, or may be arranged on different surfaces.

When the display unit 151 and a touch sensitive sensor (hereinafter, referred to as a "touch sensor") have an interlayer structure (hereinafter, referred to as a "touch screen"), the display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When there is a touch input to the touch sensor, the corresponding signals are transmitted to a touch controller (not shown). The touch controller processes the received signals, and then transmits corresponding data to the controller 180. Accordingly, the controller 180 may sense which region of the display unit 151 has been touched.

Referring to FIG. 1, a proximity sensor 141 may be arranged at an inner region of the mobile terminal 100 covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The examples of the proximity sensor may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of convenience of brief explanation, a status that the pointer is positioned to be proximate onto the touch screen without contact will be referred to as "proximity touch", whereas a status that the pointer substantially comes in contact with the touch screen will be referred to as "contact touch". For the position corresponding to the proximity touch of the pointer on the touch screen, such position corresponds to a position where the pointer faces perpendicular to the touch screen upon the proximity touch of the pointer.

The proximity sensor senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a call-placing mode, a recording mode, a voice recognition mode, a broadcast reception mode, and so on. The audio output module 152 may output audio signals relating to functions performed in the mobile terminal 100, e.g., sound alarming a call received or a message received, and so on. The audio output module 152 may include a receiver, a speaker, a buzzer, and so on.

The alarm 153 outputs signals notifying occurrence of events from the mobile terminal 100. The events occurring from the mobile terminal 100 may include call received, message received, key signal input, touch input, and so on. The alarm 153 may output not only video or audio signals, but also other types of signals such as signals notifying occurrence of events in a vibration manner. Since the video or audio signals can be output through the display unit 151 or the audio output unit 152, the display unit 151 and the audio output module 152 may be categorized into a part of the alarm 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects through a user's direct contact, or a user's muscular sense using a finger or a hand. The haptic module 154 may be implemented in two or more in number according to the configuration of the mobile terminal 100.

The memory 160 may store a program for processing and controlling the controller 180. Alternatively, the memory 160 may temporarily store input/output data (e.g., phonebook data, messages, audios, still images, videos, and the like). Also, the memory 160 may store data related to various patterns of vibrations and sounds outputted upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as 'identification device') may be implemented in a type of smart card. Hence, the identification device can be coupled to the mobile terminal 100 via a port.

The interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 for reproducing multimedia data. The multimedia module 181 may be implemented in an integrated manner within the controller 180 or may be implemented in a separate manner from the controller 180.

Furthermore, the controller 180 can perform a pattern recognition processing so as to recognize writing or drawing input on the touch screen as text or image.

Furthermore, the controller 180 may implement a lock state for limiting the user's control command input to applications when the state of the mobile terminal satisfies the prescribed condition. Furthermore, the controller 180 may control a lock screen displayed in the lock state based on a touch input sensed over the display unit 151 (hereinafter, referred to as a "touch screen") in the lock state.

The power supply unit 190 receives external power and internal power under the control of the controller 180 to provide power required by various components.

Various embodiments described herein may be implemented in a medium that can be read by a computer or similar device using software, hardware, or any combination thereof.

For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electrical units designed to perform the functions described herein. In some cases, such embodiments may be implemented in the controller 180 itself.

For software implementation, the embodiments such as procedures or functions may be implemented together with separate software modules. The software modules may perform at least one function or operation described herein.

Software codes can be implemented by a software application written in any suitable programming language. The software codes may be stored in the memory 160 and executed by the controller 180.

Hereinafter, a mobile terminal according to an embodiment of the present disclosure described in FIG. 1, or a mobile terminal disposed with constituent elements of the mobile terminal, or the structure of a mobile terminal will be described.

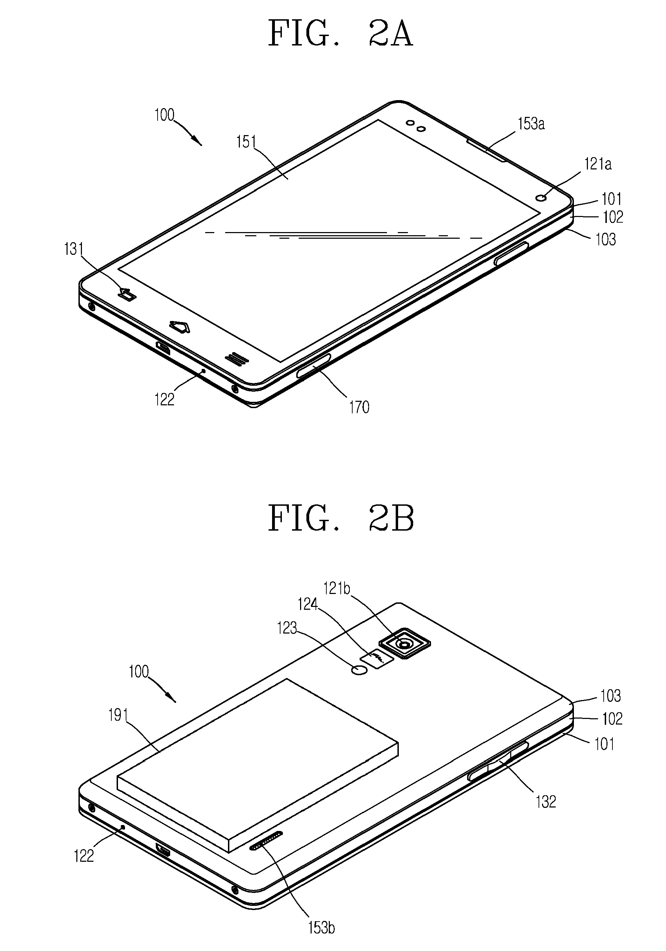

FIG. 2A is a front perspective view illustrating an example of a mobile terminal according to an embodiment of the present disclosure or an example of a mobile terminal, and FIG. 2B is a rear perspective view illustrating the mobile terminal in FIG. 2A.

The mobile terminal 100 disclosed herein is provided with a bar-type terminal body. However, the present invention is not only limited to this type of terminal, but also applicable to various structures of terminals such as slide type, folder type, swivel type, swing type, and the like, in which two and more bodies are combined with each other in a relatively movable manner.

According to the drawing, the terminal body 100 (hereinafter, referred to as a "body") may include a front surface, a lateral surface, and a rear surface. Furthermore, the body may include both ends thereof formed along the length direction.

The body 100 includes a case (casing, housing, cover, etc.) forming an appearance of the terminal. In this embodiment, the case may be divided into a front surface (hereinafter, referred to as a "front case") 101 and a rear surface (hereinafter, referred to as a "rear case") 102. Various electronic components may be incorporated into a space formed between the front case 101 and rear case 102. At least one middle case may be additionally disposed between the front case 101 and the rear case 102.

The cases may be formed by injection-molding a synthetic resin or may be also formed of a metal material such as stainless steel (STS), titanium (Ti), or the like.

A display unit 151, an audio output module 152, a camera 121, a user input unit 130 (130/131, 132), a microphone 122, an interface 170, and the like may be arranged on the terminal body 100, mainly on the front case 101.

The display unit 151 occupies a most portion of the front case 101. The audio output unit 152 and the camera 121 are disposed on a region adjacent to one of both ends of the display unit 151, and the user input unit 131 and the microphone 122 are disposed on a region adjacent to the other end thereof. The user interface 132 and the interface 170, and the like, may be disposed on a lateral surface of the front case 101 and the rear case 102. On the contrary, the microphone 122 may be disposed at the other end of the body 100.

The user input unit 130 is manipulated to receive a command for controlling the operation of the portable terminal 100, and may include a plurality of manipulation units 131, 132. The manipulation units 131, 132 may be commonly designated as a manipulating portion, and any method may be employed if it is a tactile manner allowing the user to perform manipulation with a tactile feeling.

The content inputted by the manipulation units 131, 132 may be set in various ways. For example, the first manipulation unit 131 may receive a command, such as start, end, scroll, or the like, and the second manipulation unit 132 may receive a command, such as controlling a volume level being outputted from the audio output unit 152, or switching it into a touch recognition mode of the display unit 151.

Referring to FIG. 2B, an audio output unit 152' may be additionally disposed on a rear surface, namely, a rear case 102, of the terminal body. The audio output unit 152' together with the audio output unit 152 (refer to FIG. 2A) can implement a stereo function, and it may be also used to implement a speaker phone mode during a phone call.

Furthermore, a power supply unit 190 for supplying power to the mobile terminal 100 may be mounted on a rear surface of the terminal body. The power supply unit 190 may be configured so as to be incorporated in the terminal body, or directly detachable from the outside of the terminal body.

Furthermore, a touch pad 135 for detecting a touch may be additionally mounted on the rear case 102. The touch pad 135 may be configured in an optical transmission type similarly to the display unit 151. In this case, if the display unit 151 is configured to output visual information from both sides of the display unit 151, then the visual information may be also recognized through the touch pad 135. The information being outputted from the both sides thereof may be controlled by the touch pad 135. In addition, a display may be additionally mounted on the touch pad 135, and a touch screen may be also disposed on the rear case 102.

Furthermore, a camera 121' may be additionally mounted on the rear case 102 of the terminal body. The camera 121' has an image capturing direction, which is substantially opposite to the direction of the camera 121 (refer to FIG. 2A), and may have different pixels from those of the first video input unit 121.

For example, that the camera 121 may preferably have a relatively small number of pixels enough not to cause a difficulty when the user captures his or her own face and sends it to the other party during a video call or the like, and the camera 121' has a relatively large number of pixels since the user often captures a general object that is not sent immediately. The cameras 121' may be provided in the terminal body 100 in a rotatable and popupable manner.

Furthermore, a flash 123 and a mirror 124 may be additionally disposed adjacent to the camera 121'. The flash 123 illuminates light toward an object when capturing the object with the camera 121'. The mirror allows the user to look at his or her own face, or the like, in a reflected way when capturing himself or herself (in a self-portrait mode) by using the camera 121'.

Furthermore, an audio output unit 252' may be additionally disposed on a rear surface of the terminal body. The audio output unit 252' together with the audio output unit 252 (refer to FIG. 2A) can implement a stereo function, and it may be also used to implement a speaker phone mode during a phone call.

Furthermore, a power supply unit 190 for supplying power to the portable terminal 100 may be mounted on a rear surface of the terminal body. The power supply unit 190 may be configured so as to be incorporated in the terminal body, or directly detachable from the outside of the terminal body.

A touch pad 135 for detecting a touch may be additionally mounted on the rear case 102. The touch pad 135 may be configured in an optical transmission type similarly to the display unit 151. In this case, if the display unit 151 is configured to output visual information from both sides of the display unit 151, then the visual information may be also recognized through the touch pad 135. The information being outputted from the both sides thereof may be controlled by the touch pad 135. In addition, a display may be additionally mounted on the touch pad 135, and a touch screen may be also disposed on the rear case 102.

The touch pad 135 operates in a reciprocal relation to the display unit 151 of the front case 101. The touch pad 135 may be disposed in parallel on a rear side of the display unit 151. The touch pad 135 may have the same or a smaller size as or than that of the display unit 151.

A method of providing shopping information using a mobile terminal according to the present disclosure and a user interface for providing shopping information using the mobile terminal can be implemented through the foregoing mobile terminal as illustrated in FIGS. 1, 2A and 2B.

A method of providing shopping information using a mobile terminal according to the present disclosure and a user interface for providing shopping information using the mobile terminal may be downloaded through wireless communication in the form of software to be installed in the mobile terminal. Moreover, a method of providing shopping information using a mobile terminal according to the present disclosure and a user interface for providing shopping information using the mobile terminal can be provided as one of the functions of the mobile terminal, and in this case, shopping information implemented by the present disclosure can be provided through the mobile terminal without any additional download.

Hereinafter, a method of providing shopping information according to the present disclosure using a mobile terminal will be described without distinguishing in which way a method of providing shopping information using a mobile terminal according to the present disclosure and a user interface for providing shopping information using the mobile terminal is provided.

A method of providing shopping information using a mobile terminal according to the present disclosure and a user interface for providing shopping information using the mobile terminal may provide shopping information using a home screen page. Accordingly, first, a home screen page displayed on the mobile terminal will be described in more detail with reference to the accompanying drawings.

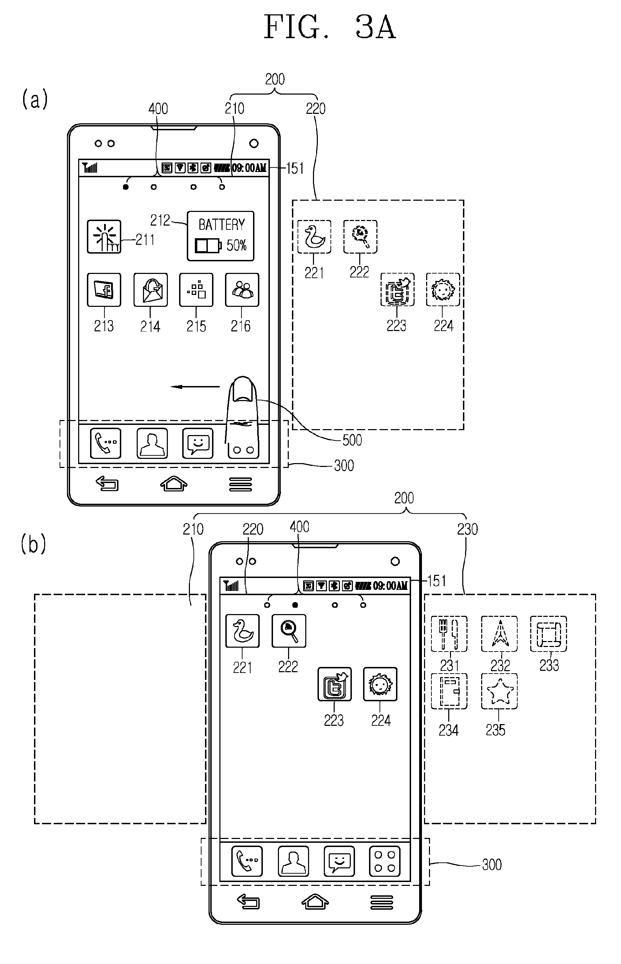

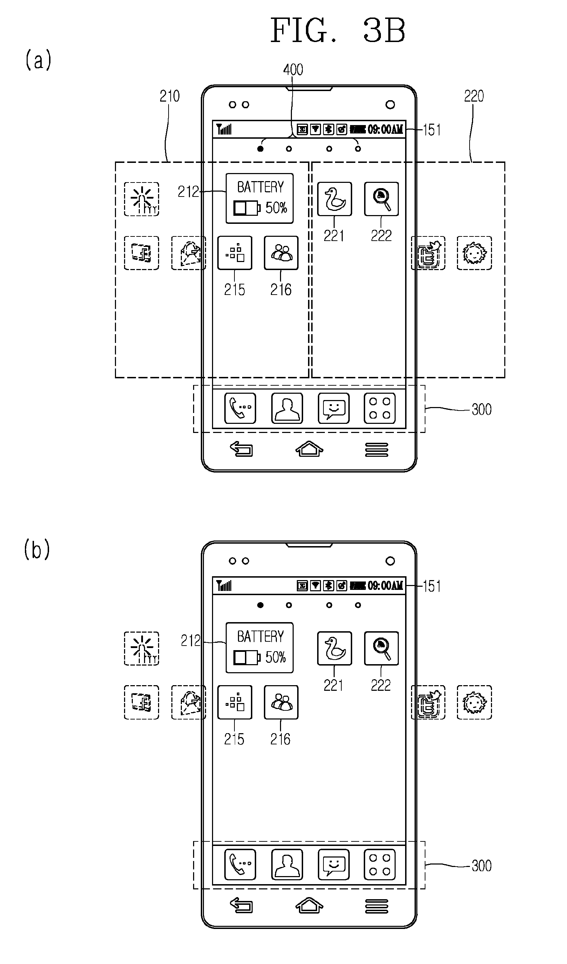

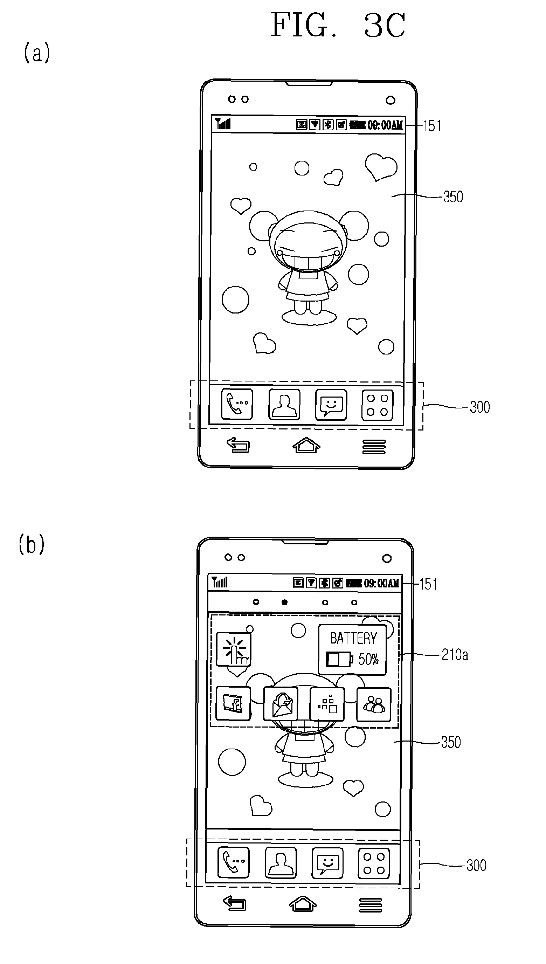

FIGS. 3A, 3B and 3C are conceptual views for explaining a method of switching a home screen page and a page displayed on the display unit to another page in a mobile terminal to which a method of providing shopping information using a mobile terminal according to an embodiment of the present disclosure and a user interface for providing shopping information using the mobile terminal are applied.

A home screen page may be displayed on the display unit of the mobile terminal. At least one object may be contained in the screen page, and the object may be an icon of a widget or application installed in the mobile terminal.

On the other hand, the home screen page may include a plurality of home screen pages 210, 220 as illustrated in FIG. 3A(a).

The home screen page may include an identification information region 400 indicating that currently displayed objects correspond to the somethingth home screen page among the plurality of home screen pages as illustrated in FIG. 3A(a). Moreover, the home screen page may further include a basic region 300 in which icons corresponding to a preset specific application are fixed and displayed by the user's selection or the controller 180.

The icons displayed in the basic region 300 may be continuously displayed on the basic region 300 even though a currently displayed home screen page 210 is switched to another home screen page 220.

The home screen page may have a size corresponding to the display unit 151 (refer to FIG. 1), and may include a preset number of objects to allow the user to recognize the objects.

Furthermore, the home screen page may be switched from a home screen page currently displayed on the display unit to another home screen page different from the displayed home screen page by a touch gesture applied by the user.

In other words, the controller 180 may switch a first home screen page 210 being displayed on the display unit 151 to a second home screen page 220 as illustrated in FIG. 3A(b) in response to a touch gesture 500 applied to the display unit 151 as illustrated in FIG. 3A(a).

Furthermore, though not shown in the drawing, a larger number of home screen pages such as a third, a fourth home screen page, and the like may be displayed on the display unit 151 in addition to the first and the second home screen page 210, 220. The number of home screen pages may be determined by the user's selection or determined by the number of applications installed in the mobile terminal.

Furthermore, as illustrated in FIG. 3B(a), a plurality of home screen pages 210, 220 may be simultaneously displayed on the display unit by the foregoing touch gesture 500, and only any one of the plurality of home screen pages may be displayed on the display unit on which the touch gesture is terminated.

Furthermore, the home screen page may be displayed in a transparent manner such that an edge and area of the home screen page is not distinguished from the other screens displayed on the display unit as illustrated in FIGS. 3B(a) and 3B(b).

In other words, the controller 180 may display only objects (icons or widgets) contained in the home screen page without displaying a boundary of the home screen page as illustrated in FIG. 3B(b).

Furthermore, as illustrated in FIG. 3C(a), a background screen (wallpaper screen) 350 may be displayed on the display unit by the user's selection or the setting of the controller 180, and the controller 180 may control the display unit 151 such that the background screen and the home screen page 210 are displayed in an overlapped manner.

The controller 180 may control the display unit 151 such that the background screen 350 is not switched when a home screen page displayed on the display unit by the user's selection is switched to another home screen page.

Moreover, the home screen page may be controlled to have a transparency level to distinguish it from the background screen, and in this case, objects (icons or widgets) contained in the home screen page may be displayed in non-transparent manner to be identified by the user.

As described above, any one of the plurality of home screen pages may be displayed on the display unit of the mobile terminal, and a currently displayed home screen page may be switched to another home screen page based on a touch gesture applied by the user.

As described above, the mobile terminal may include at least one home screen page, thereby increasing access convenience to the application.

The home screen page may be displayed on the mobile terminal in preference to other information when the mobile terminal is switched to a lock state to a release state. Furthermore, the home screen page may be displayed when a preset function key (visual key, virtual key or hot key) is selected by the user on the mobile terminal.

On the other hand, a method of providing shopping information using a mobile terminal according to the present disclosure and a user interface for providing shopping information using the mobile terminal may provide shopping information using the home screen page.

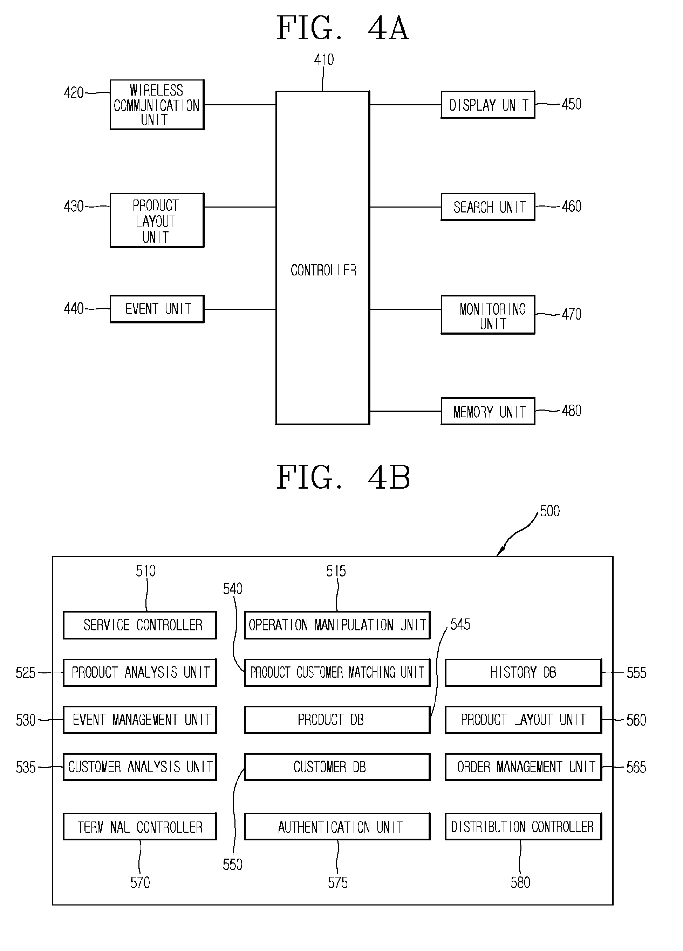

In this manner, the configuration of a user interface for providing shopping information using a mobile terminal capable of providing shopping information on a home screen page will be described in more detail with reference to FIG. 4A. FIG. 4A is a block diagram for explaining a user interface for providing shopping information using a mobile terminal according to an embodiment of the present disclosure.

As illustrated in FIG. 4A, a user interface according to the present disclosure may include a controller 410, a wireless communication unit 420, a product layout unit 430, an event unit 440, a display unit 450, a search unit 460, a monitoring unit 470, and a memory unit 480.

As illustrated in FIG. 1, the configuration of the user interface may perform the same or similar function to the configuration of the mobile terminal when it has the same or similar designation to that of the configuration of the mobile terminal.

For example, considering the configuration of the display unit 450, it performs the role of displaying all displayable information from the mobile terminal, and the configuration of the display unit 450 in a user interface according to the present disclosure performs the role of displaying all displayable information through the present disclosure. In other words, the display unit 450, 151 performs the role of displaying information, and thus the general role may be the same.

Accordingly, the configuration of a mobile terminal illustrated in FIG. 1 and the configuration of a user interface according to the present disclosure as described in FIG. 4A are not clearly divided, and thus any one configuration may be contained in the other one, or both the configurations may be the same.

Accordingly, the configuration having the same or similar designation to the constituent element illustrated in FIG. 1 among the constituent elements of the user interface illustrated in FIG. 4A may perform the same or similar function to the configuration of FIG. 1 in the viewpoint of software, and thus the detailed description thereof will be substituted by the description of FIG. 1.

On the other hand, the configuration of a user interface for providing shopping information using a mobile terminal according to the present disclosure will be described in more detail with reference to the foregoing description. First, the wireless communication unit 420 may receive shopping information from at least one external server providing shopping information. On the other hand, the shopping information may be transmitted in real time or in preset intervals, or received based on the user's selection (for example, push & pull scheme). On the other hand, the received shopping information may be transferred to other function units that use the received shopping information.

Furthermore, the wireless communication unit 420 may transmit the information of the user who uses the mobile terminal to the at least one external server or transmit data monitored by the monitoring unit 470 to the at least one external server. Furthermore, the wireless communication unit 420 may request data to the at least one external server.

Next, the product layout unit 430 may generate layout information for placing at least one product information contained in shopping information received through the wireless communication unit on a home screen page.

In this case, the controller 180 may arrange at least one product information on a home screen page based on layout information generated by the product layout unit 430. In other words, the product layout unit 430 may perform the role of determining the layout of the product information on a home screen page.

On the other hand, here, product information is contained in shopping information received through the wireless communication unit 420, and information associated with a product. For example, the product information may be sales information for "running shoes".

Furthermore, the product information may be displayed in the form of an image or video.

The product layout unit 430 may determine a plurality of product information contained in shopping information to be disposed on which home screen page among the plurality of home screen pages, and determine which product information to be disposed in which size on the home screen page. The product layout unit 430 may determine the number of product information to be contained on a home screen page.

On the other hand, as described above, layout information generated by the product layout unit 430 may be contained in shopping information received through the wireless communication unit, and in this case, the product layout unit 430 performs a function of analyzing the shopping information.

On the other hand, the home screen page may include at least one item based on layout information by the product layout unit 430, and product information may be disposed at the at least one item at the at least one item.

When a plurality of items are contained in a home screen page, the size of at least one item thereof may be different from that of the other items. Furthermore, product information with the highest priority may be disposed at an item with the largest size among the plurality of items. Meanwhile, priority information associated with product information may be contained in shopping information received through the wireless communication unit.

Next, the event unit 440 performs the role of processing event information received from at least one external server. The event information may be associated with an article contained in the shopping information.

For example, when a sale is started for any product information displayed on a home screen page, event information corresponding to the sales information may be received from the at least one external server. In this case, the event unit 440 may process the event information to allow the user to identify sales information on the any product information corresponding to the received event information. For example, the event unit 440 analyzes the any product information corresponding to the event information to transfer it to the controller 410, thereby allowing the controller 410 to process the any product information in a highlighted manner.

Next, the search unit 460 may process a search result by the user's request. For example, when a search request for any product is received by the user, the search unit 460 may provide information corresponding to the search result for the any product. Moreover, the search unit 460 may sort the search result, and for example, sort the search result according to the category. Furthermore, the search unit 460 may provide a function associated with the search result, or provide a recommendation service or recommendation product corresponding to the search result.

Next, the monitoring unit 470 may monitor information that can be collected by the user in association with the use of a mobile terminal, such as time information during which the mobile terminal is mainly used by the user, the information of the mobile terminal (phone number information or location information), application information installed by the user, product information selected by the user, and the like, in various ways.

Next, the memory unit 480 may perform the role of storing or caching information monitored by the monitoring unit 470, or storing or caching shopping information received from at least one external server. Furthermore, the memory unit 480 may store the user's account information, or store user information associated with shopping such as the user's address information, article purchase information, and the like.

Next, the controller 180 may control screen information displayed on a home screen page in response to a control command by the user's manipulation to the display unit 450, particularly, the home screen page. Furthermore, the controller 180 may control screen information displayed on a home screen page based on a request of the at least one external server.

In the above, the configuration of a method of providing shopping information using a mobile terminal and a user interface for providing shopping information using the mobile terminal has been described.

As described above, a user interface according to the present disclosure may provide shopping information on a home screen page outputted from the mobile terminal. Meanwhile, the shopping information may be received from at least one external server through the wireless communication unit.

Hereinafter, the configuration of such an external server will be described in more detail with reference to the accompanying drawings.

FIG. 4B is a block diagram for explaining a shopping information providing server 500 for providing shopping information. As illustrated in FIG. 4B, the shopping information providing server 500 may include a service controller 510, an operation manipulation unit 515, an order management unit 520, a product analysis unit 525, an event management unit 530, a customer analysis unit 535, a product customer matching unit 540, a product DB 545, a customer DB 550, a history DB 555, a product layout unit 560, an order management unit 565, a terminal controller 570, an authentication unit 575, and a distribution controller 580.

The service controller 510 may control services such as settlement, sales and the like, and control MD management and product management. For example, when the user submits a purchase request for a product using a mobile terminal, the service controller 510 may provide services such as settlement, sales and the like corresponding to the purchase request.

The operation manipulation unit 515 may control and manipulate information associated with shopping information transmission period, management and policy of shopping malls, and the like. Furthermore, the operation manipulation unit 515 may monitor shopping service operations.

The product analysis unit 525 may collect and analyze the field information and data of products, and analyze the category and score of products.

The event management unit 530 may manage and manipulate shopping events, and event information may provide the priority of the event information exposed to the mobile terminal.

The customer analysis unit 535 may analyze the information of a customer, namely, mobile terminal user (a user who uses a method of providing shopping information using a mobile terminal and a user interface for providing shopping information using the mobile terminal), and analyze the user's disposition and purchase pattern.

The product customer matching unit 540 may match the customer (or user) to a suitable product based on the information analyzed by the customer analysis unit 535. The product customer matching unit 540 may generate basic information for matching the customer to the product based on the fixed characteristics of products (brand, price or category) and the variable characteristics of products (gender, region, age, etc.)

Moreover, the customer analysis unit 535 may generate priority information on product information such that product information having the highest correlation between the customer's characteristic information and the characteristic information of the product can be preferentially provided to the mobile terminal. For the priority information, a score may be given to each product, and the shopping information providing server may provide shopping information containing product information corresponding to the highest scored product according to each customer to each customer (or user).

The product DB 545 (or product/purchase DB) may store matching information associated with product information to be disposed on a home screen page. Furthermore, product information associated with a product purchased on the mobile terminal, a product placed in the shopping basket, a product of interest or the like may be stored in the product DB 545.

The customer DB 550 may store the personal information, disposition information, terminal information and the like of the customer (or user who uses a method of providing shopping information using a mobile terminal according to an embodiment of the present disclosure and a user interface for providing shopping information using the mobile terminal)

The product layout unit 560 and distribution controller 580 may control the location, size and layout information of the product information to be transmitted to the mobile terminal, and generate and transmit data associated with the configuration of a home screen page.

The order management unit 565 may control and monitor the user's order received through the mobile terminal, and manages the information of an ordered product, and manage the telephone counselling call signalling.

The terminal controller 570 and authentication unit 575 may verify the user's mobile terminal that uses a method of providing shopping information using a mobile terminal according to an embodiment of the present disclosure and a user interface for providing shopping information using the mobile terminal, and perform security and authentication for controlling the mobile terminal. Furthermore, the terminal controller 570 and authentication unit 575 may control the number and layout order of home screen pages in the mobile terminal.

On the other hand, though not shown in the drawing, the shopping information providing server may further include an advertisement unit (not shown), and the advertisement unit may manage advertisement information to be transmitted to the mobile terminal.

Moreover, information associated with the advertisement information being disposed in the mobile terminal may be managed by the foregoing product layout unit 560.

On the other hand, the configuration of the shopping information providing server and information generated, monitored or stored by the shopping information providing server may be modified or substituted in various ways.

As described above, the shopping information providing server may communicate with the wireless communication unit included in a user interface according to the present disclosure to transmit information generated from each constituent element included in the shopping information providing server to the mobile terminal. In the present specification, various information provided through the shopping information providing server may be commonly referred to as "shopping information".

Hereinafter, a method of providing shopping information using a mobile terminal will be described in more detail based on the foregoing content with reference to the accompanying drawings.

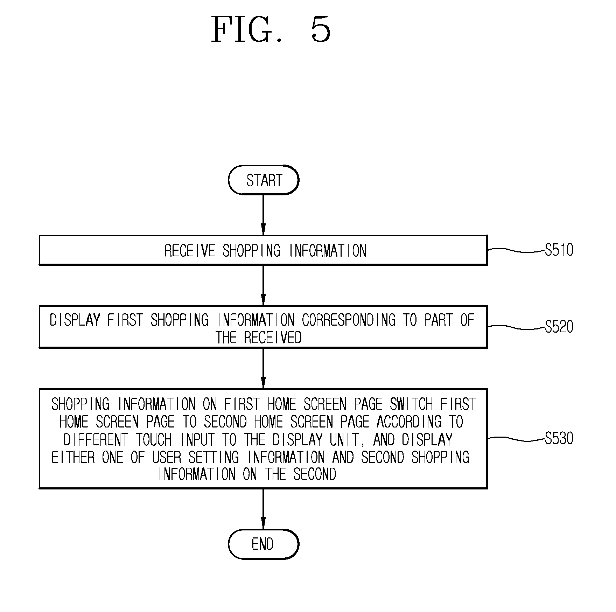

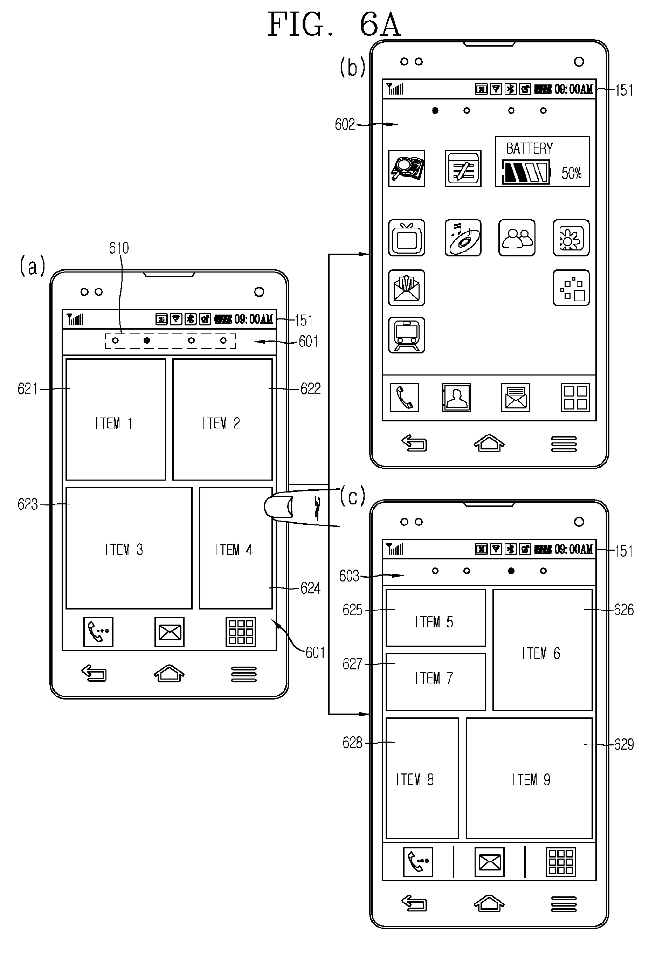

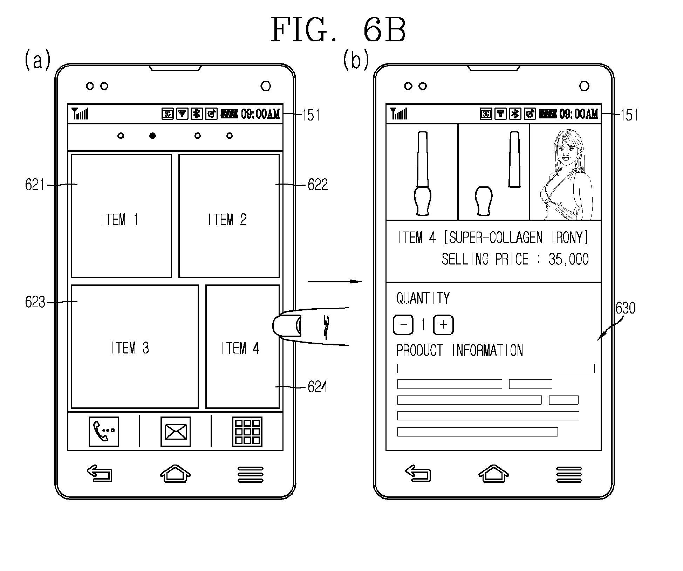

FIG. 5 is a flow chart for explaining a method of providing shopping information using a mobile terminal according to an embodiment of the present disclosure, and FIGS. 6A and 6B are conceptual views for explaining the flow chart of the FIG. 5.

The shopping information described below may be received from the shopping information providing server as illustrated in FIG. 4B, and for convenience sake, the duplicate description of the shopping information providing server for providing shopping information will be omitted below. Furthermore, constituent elements described in the present disclosure are the foregoing constituent elements of the user interface described in FIG. 4A, and as described above, they may be the same as those of the mobile terminal described in FIG. 1 or may be included therein.

Considering a method for providing shopping information through the user interface according to the present disclosure, first, the process of receiving shopping information is carried out (S510). The shopping information may be received from at least one external server (hereinafter, referred to as a" shopping information providing server") through the wireless communication unit 420.

On the other hand, the received shopping information may be received in a different manner according to the wireless network access status of the wireless communication unit 420 (or the wireless network access status of the mobile terminal). For example, the amount of the received shopping information data may vary depending on whether the mobile terminal is currently accessing a Wi-Fi network or accessing a 3G or 4G network.

Moreover, the received shopping information may be received in a different manner according to service charge plans, namely, charge information, subscribed by the mobile terminal. For example, the amount of the received shopping information data may vary depending on whether the mobile terminal is subscribed to an unlimited data plan or subscribed to a limited data plan.

Moreover, the received information may vary according to the user's shopping rating (for example, member rating for a shopping mall).

Furthermore, the received shopping information may vary according to the user's amount paid for shopping.

As described above, shopping information may be provided in various ways according to at least one of user and mobile terminal characteristics based on various standards.

The monitoring unit 470 may monitor the wireless communication access status or charge information of the mobile terminal to provide it to the shopping information providing server, and the shopping information providing server may adjust the data amount based on the information.

On the other hand, upon receiving shopping information, the process of displaying first shopping information corresponding to at least part of the received shopping information on a first home screen page is carried out (S520). Here, the first shopping information may include at least one product information as illustrated in FIG. 6A(a) (for convenience sake, product information is expressed as an "item" in the present specification). The product information may be displayed in the form of an image or video on a home screen page.

On the other hand, the number of product information contained in a first home screen page 601, namely, the number of items, the size of items being disposed and the like may be based on the received shopping information. Accordingly, the product layout unit 430 may generate product information, namely, the layout information of items and the like, based on the received shopping information, and the controller 410 may dispose the items on a home screen page based on the layout information.

On the other hand, as described above, product information, namely, items, are disposed at at least one item contained in a home screen page displayed with the shopping information as well as the first home screen page 601, and the number and size of items contained in the home screen page may be determined by the layout information. In this manner, the number of items contained in one home screen page (the number of product information or items) may be determined based on the received shopping information. Moreover, which product information will be disposed on a home screen page may be also determined based on the received shopping information.

In this manner, the layout of product information disposed on a home screen page may be determined based on the received shopping information. Furthermore, the product layout unit 430 may determine a plurality of product information contained in shopping information to be disposed on which home screen page among the plurality of home screen pages, and determine which product information to be disposed in which size on the home screen page.

On the other hand, the user interface may include a plurality of home screen pages based on the user's selection or the received shopping information, and allow product information corresponding to the received shopping information to be contained in at least one of the plurality of home screen pages.

Moreover, on which home screen page the shopping information is to be displayed among the plurality of home screen pages may be determined based on the user's selection or the received shopping information.

On the other hand, the layout (for example, the number of items disposed with product information, layout order, layout size, etc.) of the home screen page displayed with shopping information received from the shopping information providing server may not be changed in response to the user's control command (for example, a touch input applied to the display unit 151). In other words, the layout of the home screen page displayed with shopping information received from the shopping information providing server may be controlled based on the received shopping information, and independent to the user's control command.

Furthermore, at least one of the plurality of home screen pages may include user setting information based on the user's selection or the received shopping information.

Here, the user setting information may include a graphic object corresponding to at least one of the icon or widget of an application selected by the user. In other words, the layout of a home screen page including the user setting information may be changed according to the user's selection.

On the other hand, as described above, when a touch input is applied to the display unit 151 in a state that the first home screen page 601 is displayed on the display unit 151, detailed information corresponding to at least part of the first shopping information may be displayed or the first home screen page displayed on the display unit may be switched to a second home screen page different from the first home screen page according to the scheme of a touch input to the display unit, and either one of user setting information on the second home screen page and second shopping information corresponding to at least part of the shopping information and different from the first shopping information may be displayed on the second home screen page.

In other words, the controller 410 may change the first home screen page 601 to either one of a second home screen page 602 containing user setting information as illustrated in FIG. 6A(b) or a second home screen page 603 containing second shopping information as illustrated in FIG. 6A(c) according to the touch input scheme.

On the other hand, when the first home screen page is switched to a second home screen page containing the second shopping information, the second shopping information may be received prior to applying a touch input for displaying the second home screen page or received in response to the touch input. In other words, the time point for receiving the second shopping information may vary in various ways.

Moreover, the controller 410 may output detailed information 630 on any product information (for example, item 4) as illustrated in FIGS. 6B(a) and 6B(b) according to the touch input scheme.

As illustrated in FIG. 6A, a touch input for switching the first home screen page 601 to the second home screen page 602 may be a flicking, a dragging or a sliding touch input to the display unit 151. Furthermore, as illustrated in FIG. 6B, a touch input for displaying detailed information on any one of product information contained in the first home screen page 601 may be a short touch, a tab touch or a long touch input to a region displayed with the any one product information.

On the other hand, when the first home screen page is switched to the second home screen page, the kind of information (for example, shopping information or user setting information) displayed on the second home screen page may be dependent on the layout order of home screen pages and the direction of a touch input applied to the display unit 151.

For example, in case where the second home screen page containing shopping information is disposed at the left side of the first home screen page, when a touch input for moving the first home screen page in the left direction is applied in a state that the first home screen page is displayed, the second home screen page containing shopping information may be displayed.

Furthermore, in case where the second home screen page containing shopping information is disposed at the right side of the first home screen page, when a touch input for moving the first home screen page in the right direction is applied in a state that the first home screen page is displayed, the second home screen page containing user setting information may be displayed.

On the other hand, the second shopping information contained in the second home screen page 603 corresponds to product information contained in the received shopping information, and shopping information contained in the home screen page which will be described below may be understood to be product information contained in the received shopping information. Accordingly, it corresponds to the description of the first shopping information contained in the first home screen page 601 illustrated in FIG. 6A(a), and thus the detailed description thereof will be omitted.

As described above, a method of providing shopping information using a mobile terminal and a user interface for providing shopping information using the mobile terminal may provide shopping information on a home screen page. Accordingly, the user can receive shopping information in an easy and quick manner when using a mobile terminal without implementing Internet Explorer on the mobile terminal to access a shopping mall or accessing a shopping mall application.

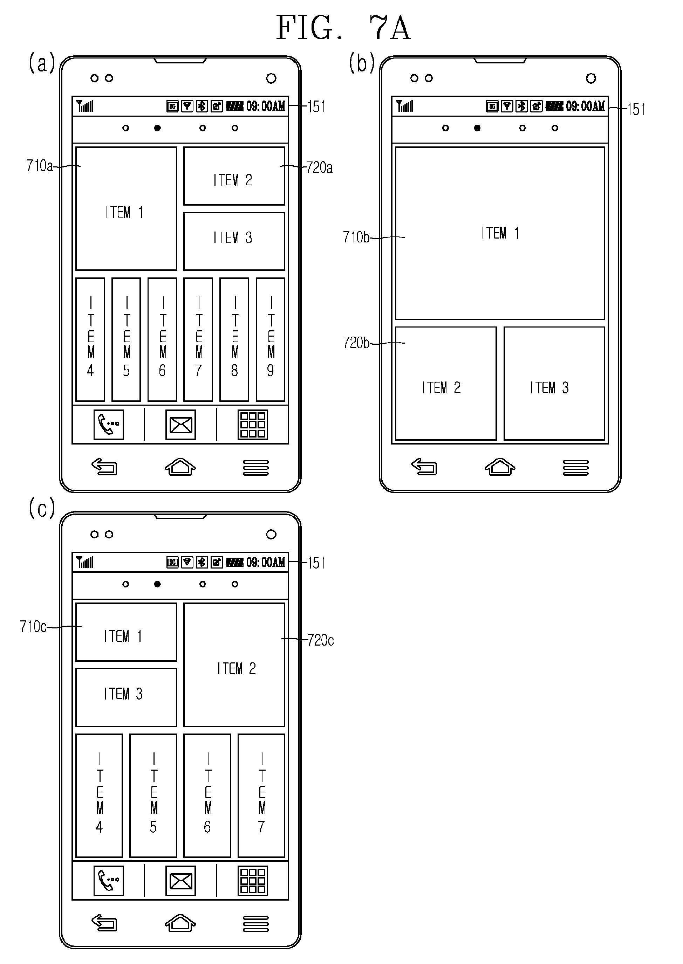

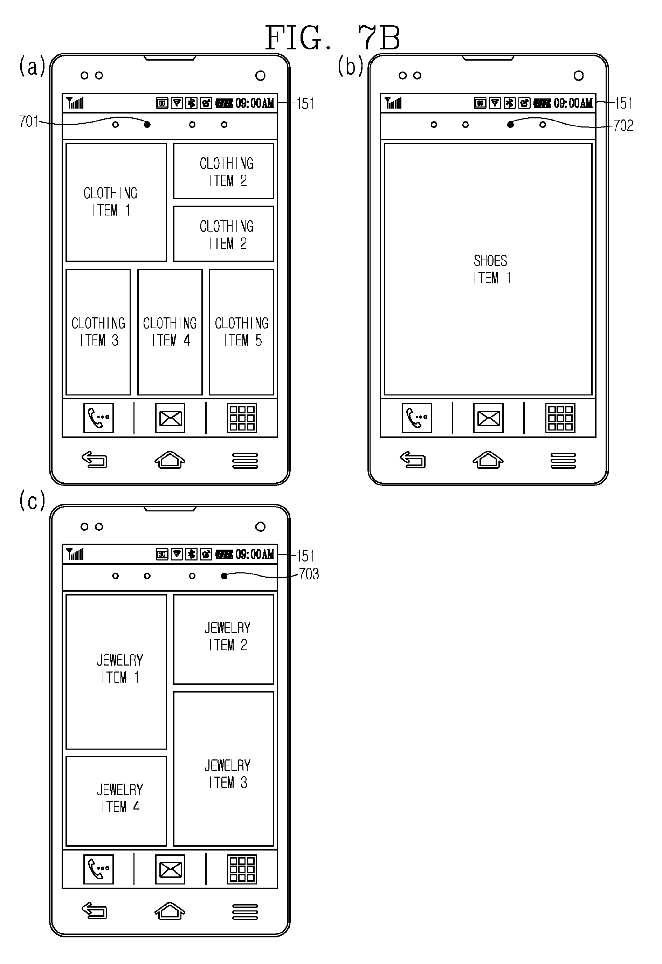

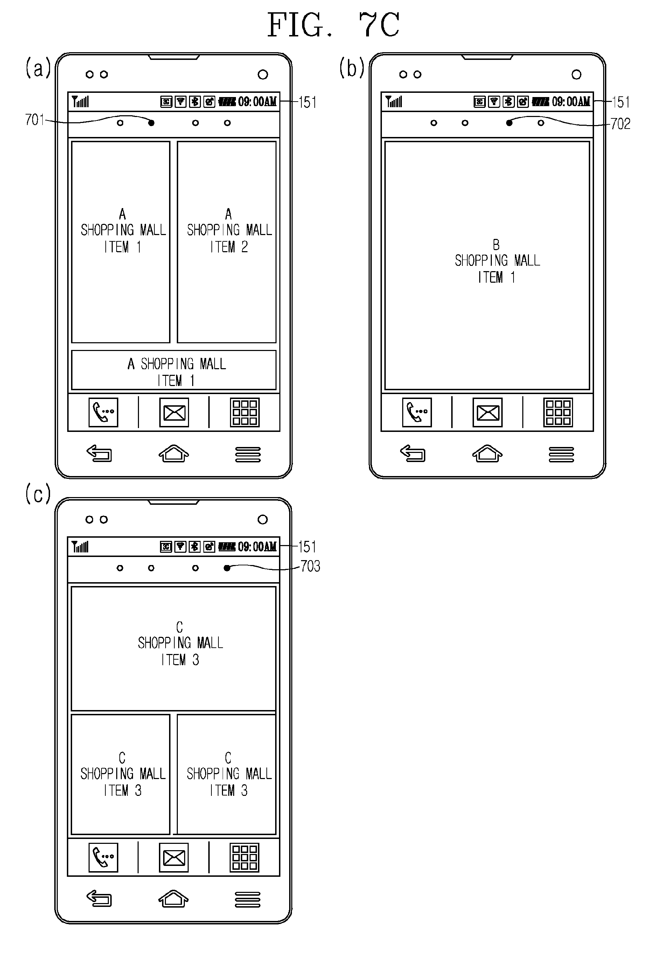

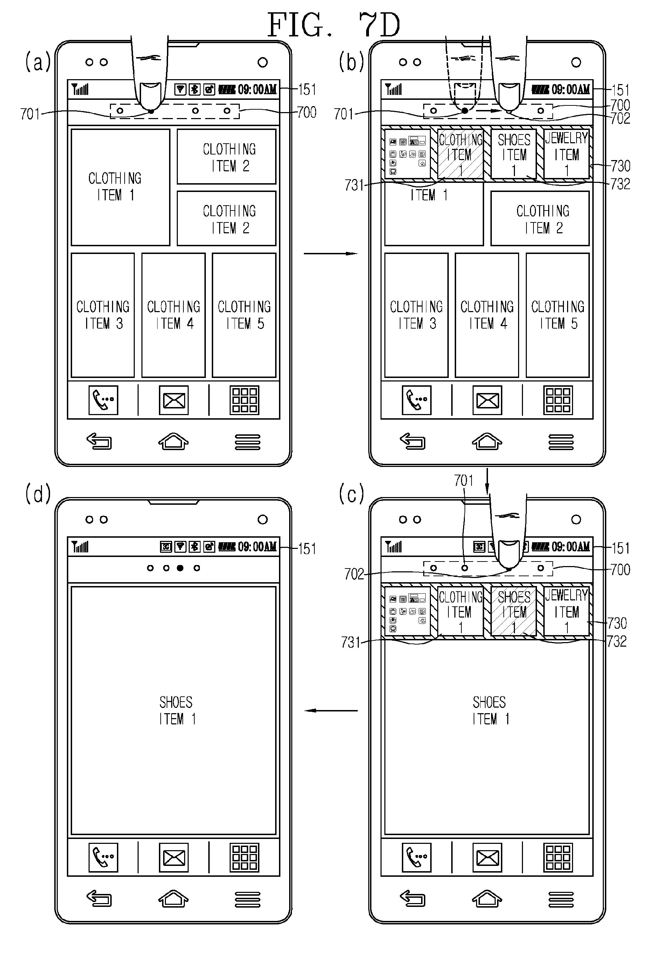

Hereinafter, shopping information displayed on a home screen page will be described in more detail with reference to the accompanying drawings. FIGS. 7A, 7B, 7C and 7D are conceptual views for explaining a method of providing shopping information on a home screen page.

The controller 410 may provide product information on a home screen page in various ways as disclosed in the following description based on shopping information received from the shopping information providing server.

For an example, considering the size of items contained in a home screen page, as described above, the home screen page may include at least one item for disposing at least one product information, respectively. As illustrated in FIG. 7A(a), the home screen page may include nine items for items 1 through 9 corresponding to product information. Furthermore, the size of items may vary based on the priority of the product information to be disposed at each item.

For example, when a product having the highest priority is item 1 in FIG. 7A(a), the size of the item 710a in which item 1 is disposed on the home screen page may be the largest than the other items. Accordingly, as illustrated in the drawing, item 1 may be displayed in the largest size on the home screen page.

Furthermore, as illustrated in FIG. 7A(b), the size of the item 710b in which item 1 is disposed may be larger than that illustrated in FIG. 7A(a).

Moreover, as illustrated in FIG. 7A(c), when the priority of item 2 is higher than that of item 1, the size of the item 710c in which item 1 is disposed may be smaller than that of the item 720c in which item 2 is disposed.

In this manner, the size and number of items contained in the home screen page may vary according to the priority of product information contained in the home screen page. Meanwhile, information associated with the priority of the product information to be disposed at an item contained in the home screen page may be contained in shopping information received from the shopping information providing server.

For another example, different home screen page may include different kinds of product information.

Here, on which home screen page what kind of product information is displayed may be determined based on shopping information received from the shopping information providing server or determined by the user's selection.

For example, the first home screen page 701 may include product information associated with clothing as illustrated in FIG. 7B(a), and the second home screen page 702 may include product information associated with shoes as illustrated in FIG. 7B(b), and the third home screen page 703 may include product information associated with jewelry as illustrated in FIG. 7B(c).

Furthermore, for another example, the first home screen page 701 may include product information associated with "A" shopping mall as illustrated in FIG. 7C(a), and the second home screen page 702 may include product information associated with "B" shopping mall as illustrated in FIG. 7C(b), and the third home screen page 703 may include product information associated with "C" shopping mall as illustrated in FIG. 7C(c).

In this manner, product information corresponding to different categories or different shopping malls are displayed on different home screen pages, respectively, and thus the user may feel consistency when receiving product information through the home screen page.

For another example, the user interface according to the present disclosure may provide summary information on product information contained in a plurality of home screen pages, respectively, using an identification information region 400 indicating a position of a currently displayed home screen page among the plurality of home screen pages.

For example, when a touch input is applied to the identification information region 700 as illustrated in FIG. 7D(a), the controller 410 may display a preview image (or thumbnail image) corresponding to at least one of the plurality of home screen pages in a preview region 730 as illustrated in FIG. 7D(b).

The preview image displayed in the preview region 730 may correspond to an image in which the home screen page is reduced or an image corresponding to representative product information among product information contained in the home screen page. Moreover, the preview image may include a category, shopping mall information, event information and the like corresponding to the product information contained in the home screen page.

On the other hand, as illustrated in FIG. 7D(b), the controller 410 may process a preview image 731 corresponding to the home screen page currently being displayed on the display unit in a highlighted manner to distinguish it from the other preview images.

Here, the highlighting processing of the preview image 731 may be carried out by the enlargement, reduction, blinking, transparency change, edge emphasis of a highlighting object.

Furthermore, when a touch input in a preset scheme is applied to the identification information region 700 as illustrated in FIG. 7D(b), for example, when a drag or slide touch input moving in one direction is applied, the controller 410 may switch the currently displayed home screen page to a different home screen page based on the level at which the touch input is applied as illustrated in FIG. 7D(c).

Furthermore, in this case, the controller 410 may control the display unit 151 to highlight a preview image 732 corresponding to the different home screen page.

On the other hand, when the touch input is terminated, for example, when his or her finger is removed from the display unit 151, the controller 410 may display a home screen page corresponding to the currently highlighted preview image 432 as illustrated in FIG. 7D(d).

On the other hand, though not shown in the drawing, according to the present disclosure, the controller 410 may change the location (or layout order) of at least one preview image contained in the preview region based on the user's touch input, thereby changing the match order of home screen pages dependent on the location change of the preview image.

Furthermore, the controller 410 may remove a home screen page corresponding to the preview image in response to a touch input to the preview image in a preset scheme (for example, a touch input for dragging the preview image by a preset length).

Furthermore, the controller 410 may add product information displayed in the preview image to a shopping basket in response to a touch input to the preview image in a preset scheme (for example, a long touch input).

As described above, according to the present disclosure, the user may easily recognize information on product information contained in the home screen page through the preview region.

On the other hand, in the above, an embodiment in which shopping information is displayed on a home screen page has been described in FIGS. 5, 6A, 6B, 7A, 7B, 7C and 7D, but advertisement information received from the shopping information providing server may be contained in at least part of the home screen page. In other words, advertisement information may be disposed at at least one of the at least one item contained in the home screen page. The advertisement information may be displayed in the form of an image or video.

Furthermore, when an item disposed with the advertisement information is selected by the user, detailed information associated with the advertisement information can be displayed on the display unit.

Hereinafter, the structure of a home screen page will be described in more detail with reference to the accompanying drawings.

The user interface according to the present disclosure may have a plurality of home screen pages based on shopping information received from the shopping information providing server or the user's selection. The plurality of home screen pages may include different shopping information or user setting information.

Moreover, the plurality of home screen pages may have a form consisting of one row and may have a matrix structure consisting of at least one row and column as illustrated in FIGS. 3A, 3B and 3C.

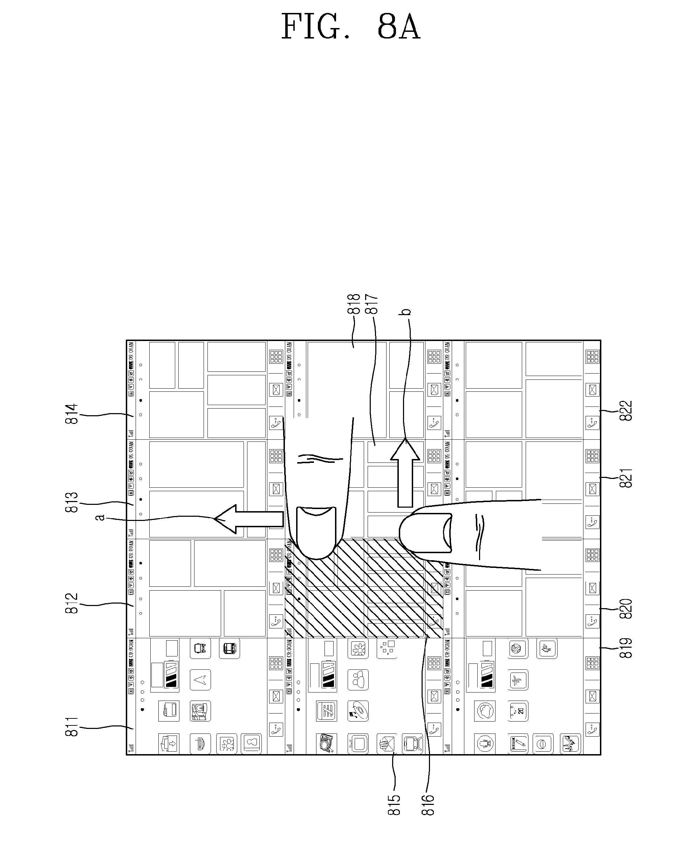

For example, referring to FIG. 8A, the plurality of home screen pages may have a matrix structure corresponding to three rows and four columns (3 x 4). In other words, in this case, there may exist twelve home screen pages.

When a touch input is applied in the "a" direction on the currently displayed sixth home screen page 816 (the number of home screen page is provided in an arbitrary manner in the order of arranging home screen pages), the controller 410 may display a second home screen page 812 adjacent to the sixth home screen page 816 in the "a" direction on the display unit 151. Furthermore, when a touch input is applied in the "b" direction on the currently displayed sixth home screen page 816 (the number of home screen page is provided in an arbitrary manner in the order of arranging home screen pages), the controller 410 may display a seventh home screen page 817 adjacent to the sixth home screen page 816 in the "b" direction on the display unit 151.

Furthermore, for example, when a second home screen page 812 is displayed in response to the touch input, and then a touch input is applied in the right horizontal direction, a third home screen page 813 may be displayed on the display unit 151.

As described above, according to the present disclosure, the home screen page may be formed in a matrix structure, thereby increasing diversity associated with the switching of home screen pages.

For example, as illustrated in FIG. 8A, when a touch input for moving the first home screen page 811 in the column direction in a state that user setting information is displayed on the first home screen page 811, the first home screen page 811 may be switched to a fifth home screen page 815, and user setting information different from the user setting information displayed on the first home screen page 811 may be displayed on the fifth home screen page 815.

Furthermore, when a touch input for moving the second home screen page 812 in the column direction in a state that shopping information is displayed on the second home screen page 812, the second home screen page 812 may be switched to a sixth home screen page 816, and shopping information different from the shopping information displayed on the second home screen page 812 may be displayed on the sixth home screen page 816. In this manner, when the home screen page forms a plurality of columns in a matrix structure, shopping information with different attributes may be contained in home screen pages corresponding to different columns.

In other words, according to the present disclosure a home screen page corresponding to the same row or the same column may include information having the same attribute. Here, the same attribute or different attribute may be associated with at least one of product category information, shopping mall information, and user setting information.

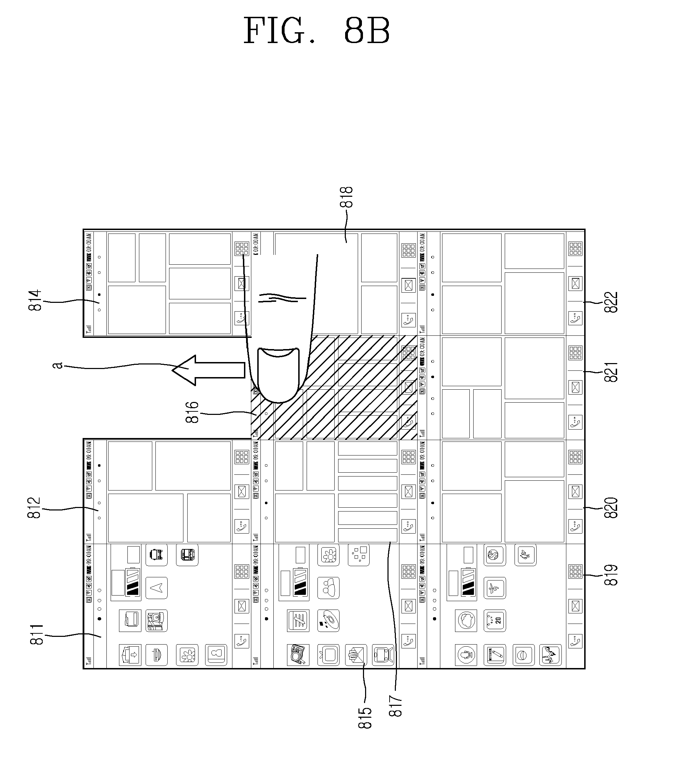

On the other hand, at least one home screen page may not exist as illustrated in FIG. 8B in a matrix structure consisting of a plurality of home screen pages. In this case, when a touch input is applied in the "a" direction where there exist no home screen page in a state that the sixth home screen page 816 is displayed on the display unit 151, the controller 180 may output the second home screen page 812 or fourth home screen page 814 corresponding to the "a" direction and adjacent to the sixth home screen page 816.

Furthermore, when there are a plurality of home screen pages that can be displayed in response to the touch input in the "a" direction (for example, second home screen page 812 or fourth home screen page 814), the priority information associated with which home screen page to be displayed among a plurality of home screen pages may be contained in shopping information received from the shopping information providing server.

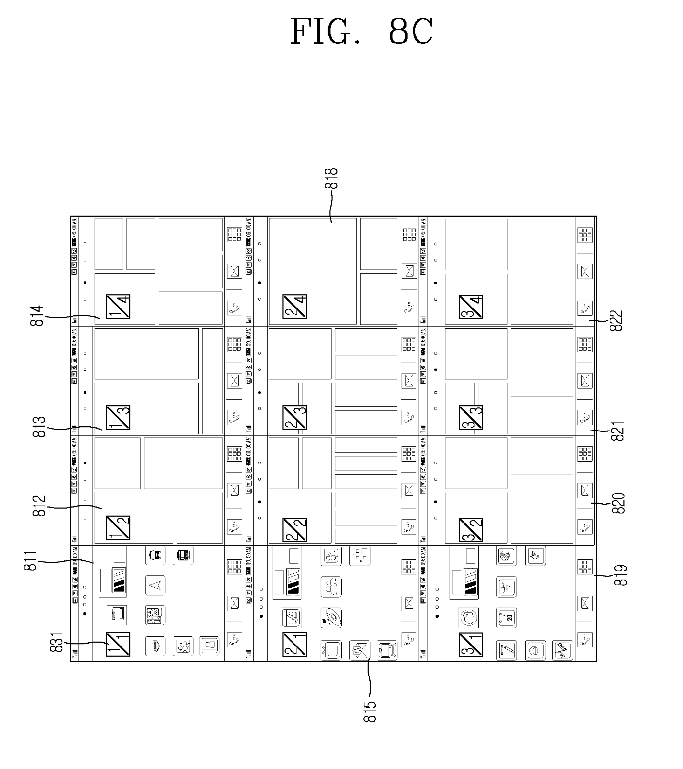

On the other hand, when the home screen page forms a matrix structure, the user may feel confused in that the home screen page displayed on the display unit 151 is the somethingth home screen page. As a result, according to the present disclosure, the row/column number of the currently displayed home screen pages may be displayed on the home screen pages as illustrated in FIG. 8C.

For an example, the identification information 831 of "1/1" indicating the first row and first column may be displayed on the first home screen page. Furthermore, the identification information of "1/3" indicating the first row and third column may be displayed on the third home screen page 813.

On the other hand, a method of indicating the row/column number may be changed in various ways in addition to the foregoing method.

On the other hand, when the home screen page is switched, the identification information may be displayed for a preset period of time and then the display thereof may disappear on the display unit 151. Furthermore, the identification information may be displayed or removed on the display unit 151 in response to a control command applied from the user.

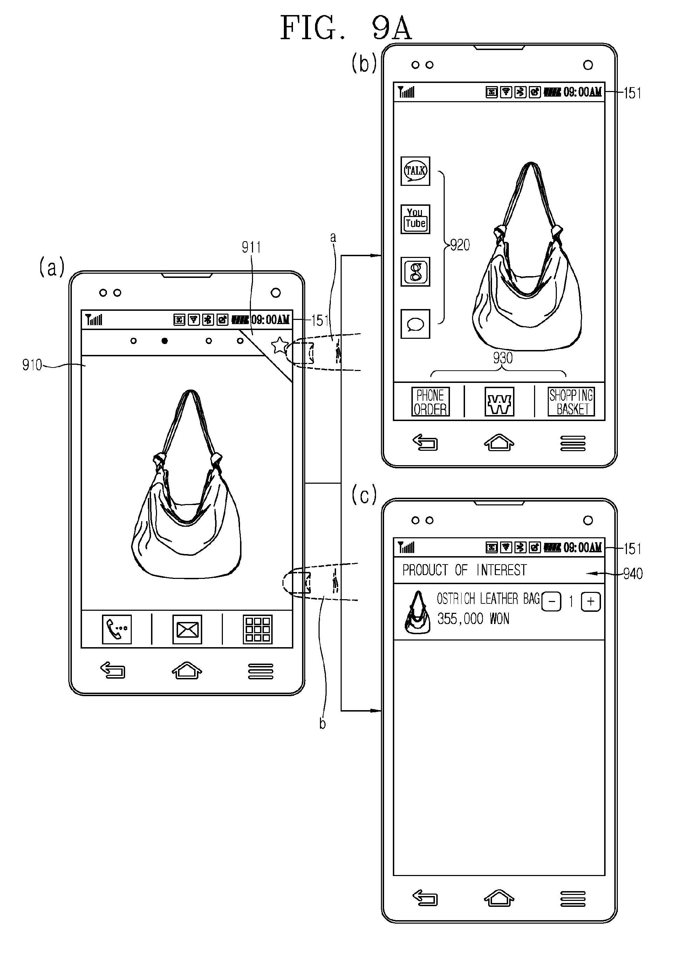

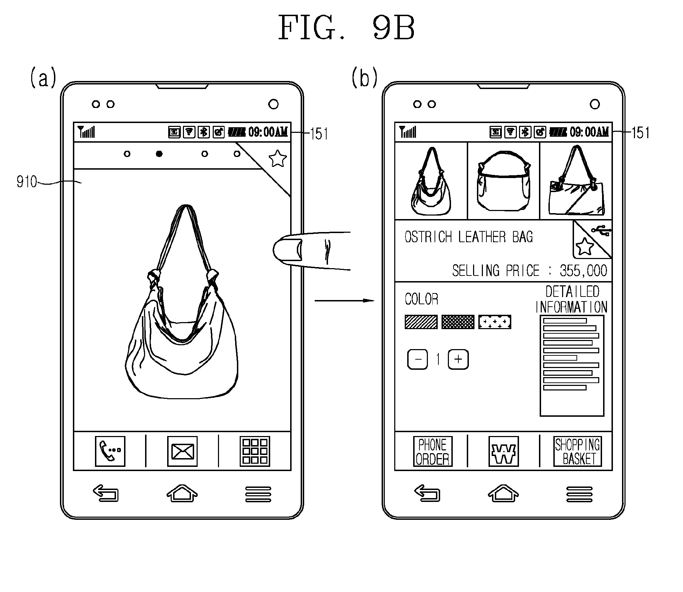

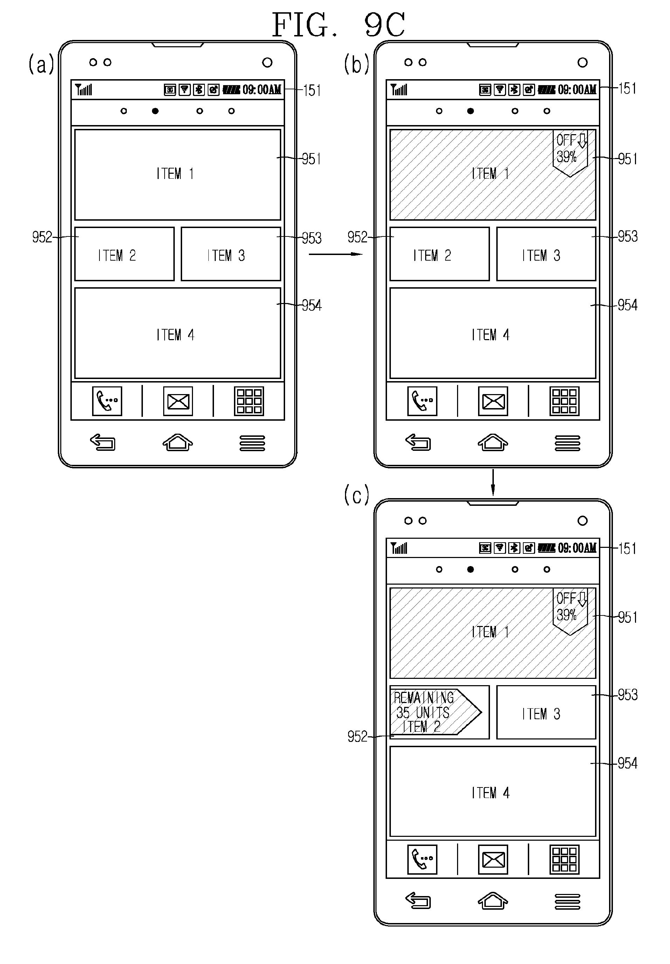

Hereinafter, a method of providing an additional function for product information displayed on the home screen page will be described in more detail with reference to the accompanying drawings. FIGS. 9A, 9B and 9C are conceptual views for explaining a method of providing an additional function for product information displayed on a home screen page.

For the sake of convenience of explanation, FIGS. 9A, 9B and 9C will describe a case where one product information is displayed on the home screen page, for example.

First, as illustrated in FIG. 9A, a function icon 911 for setting a product corresponding to the product information to a product of interest may be displayed along with the product information 910 on the home screen page.

On the other hand, the product information 910 displayed on the home screen page may include an image of the product, a cost of the product, an introduction of the product, and the like.

Then, when the function icon 911 is selected by the user, the controller 410 may set a product corresponding to the product information to a product of interest as illustrated in FIG. 9A(c). When the function icon 911 is selected, a product-of-interest list 940 may be displayed on the display unit 151. The product-of-interest list may include other products of interest previously set by the user in addition to the product.

On the other hand, here, the "product of interest" is a product in which the user shows interest, and can be set by the user's selection, and if it is set to a product of interest, the product-of-interest information may be stored in the memory unit 480 (or database), and moreover, transmitted to the shopping information providing server.

On the other hand, when any one position (refer to "b") is touched for a preset period of time on the display unit 151 in a state that product information is displayed on the home screen page as illustrated in FIG. 9A(a), the controller 410 may display at least one function icon corresponding to a function associated with the product information as illustrated in FIG. 9A(b).

For example, the controller 410 may output at least one share function icon 920 for allowing the product information to be shared with another mobile terminal or external server.

Here, when any one of the at least one share function icon 920 is selected, the controller 410 may control the wireless communication unit 420 to transmit product information using an application corresponding to the selected function icon.

Furthermore, the controller 180 may output at least one purchase function icon 930 associated with the purchase of a product corresponding to the product information.

The controller 410 may control the wireless communication unit 420 to place a call to a shopping mall that sells a product corresponding to the product information when a "phone order" icon is selected, and the controller 410 may control the operation of the mobile terminal to perform a settlement transaction through the mobile terminal when a "general settlement" icon is selected. Furthermore, the controller 410 may store the product information in the memory unit 480 (or database) to perform a settlement transaction for a product corresponding to the product information later when a "shopping basket" icon is selected, and output the product information again when a screen corresponding to the shopping basket function is displayed.

On the other hand, though not shown in the drawing, when a product corresponding to the product information is sold out, the "shopping basket" icon may be changed to an "update" icon for requesting an update for product information corresponding to the product to product information for another product. Furthermore, when a product corresponding to the product information is sold out, identification information for indicating that the product corresponding to the product information has been sold out may be displayed in at least one region of the product information.

Moreover, in this case, the "shopping basket" icon may be also changed to an icon for requesting the security of goods in stock in addition to the "update" icon.

Furthermore, when a touch input in a preset scheme (for example, short touch or tab touch) is applied to the product information 910 displayed on the home screen page as illustrated in FIG. 9B(a), the controller 410 may control the display unit 151 to output the detailed information of a product corresponding to the product information as illustrated in FIG. 9B(b).

The detailed information may include at least one of the detailed image and detailed description of a product, and may include at least one function icon for allowing the product information to be set to a product of interest or to be shared and at least one purchase function icon associated with the purchase.

Furthermore, the detailed information may include at least one detailed item for selecting the option of a product to be purchased such as a quantity, a color, a size, and the like of the product to place an order for the product corresponding to the product information.

For example, when the user selects its color and quantity through the detailed item contained in the detailed information illustrated in FIG. 9B(b), and then selects a function icon corresponding to the phone order or general check function, the controller 410 may control the wireless communication unit 420 to transmit the product information and the detailed information of a product corresponding to the detailed item selected by the user to the shopping information providing server.

Furthermore, when event information is received for the product information disposed on the home screen page, the controller 180 may overlap the received event information with the product information.

For example, when event information is received for any product information, for example, item 1 951 as illustrated in FIG. 9C(a), the controller 410 may control the display unit 151 to overlap the received event information (for example, 39% discount information) with the item 1 951 as illustrated in FIG. 9C(b).

The item 1 951 may be highlighted in response to the event information being received. For example, an image layer having any color may be gradually overlapped with the item 1 951 while showing an animation effect.

Furthermore, as illustrated in FIG. 9C(c), when event information is also received for item 2 952, the controller 410 may overlap the item 2 952 with the event information (for example, remaining 35 units).

On the other hand, when event information are received for items 1 and 2 at the same time, the controller 410 may overlap the event information with the items 1 and 2 in a sequential and simultaneous manner. Meanwhile, when event information is sequentially overlapped, the order of overlap may be based on priority information contained in shopping information received from the shopping information providing server.

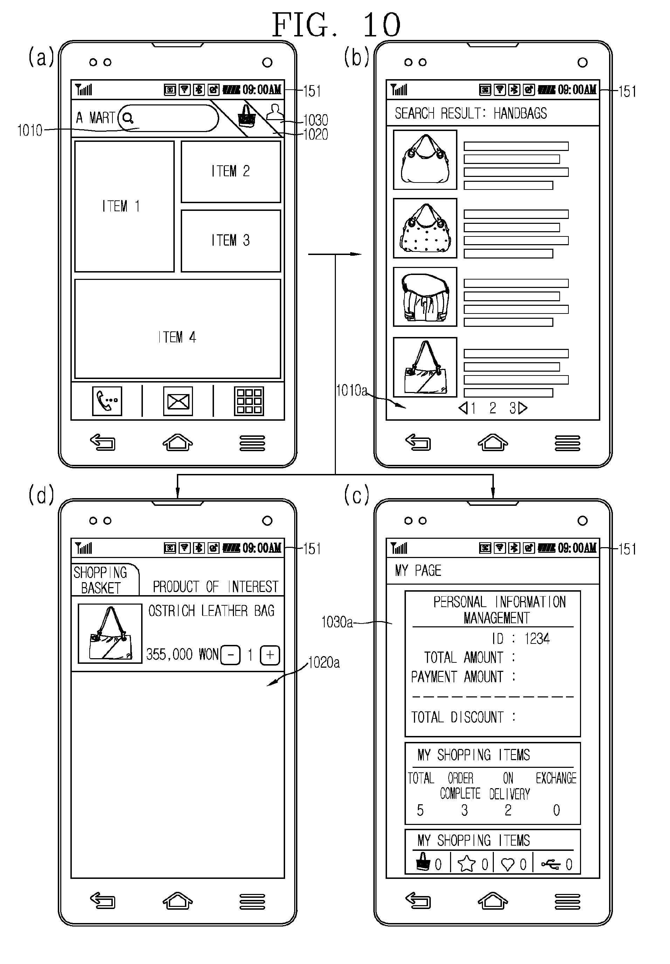

Hereinafter, a method for enhancing shopping convenience on a home screen page will be described in more detail with reference to the accompanying drawings. FIG. 10 is a conceptual view for explaining a method of providing a convenience function associated with a shopping function on a home screen page.

A method of providing shopping information using a mobile terminal according to an embodiment of the present disclosure and a user interface for providing shopping information using the mobile terminal may provide a convenience function to allow the user to enjoy shopping on a home screen page in a convenient manner.

For example, as illustrated in FIG. 10A, the home screen page may include at least one of a search region 1010, a shopping basket function icon 1020, and a user page shortcut icon 1030.

For example, when entering a keyword in the search region 1010, the controller 410 may transfer the entered keyword to the shopping information providing server or shopping mall server, and control the wireless communication unit 420 to receive a search result corresponding to the entered keyword. Accordingly, as illustrated in FIG. 10B, search results corresponding to the entered keyword may be displayed on the display unit 151.

Furthermore, when the user page shortcut icon 1030 is selected by the user, the controller 410 may display a user page displayed with the user's account information, shopping information, and the like on the display unit 151 as illustrated in FIG. 10C. Meanwhile, information contained in the user page may be changed in various ways.

Furthermore, when the shopping basket function icon 1020 is selected by the user, the controller 410 may display at least one product information list that has been stored in a separate database (or memory) to allow the user to perform a settlement transaction later.

On the other hand, according to the present disclosure, in addition to the function disclosed in FIG. 10, various functions may be added to allow the user to enjoy shopping through a home screen page in a convenient manner.

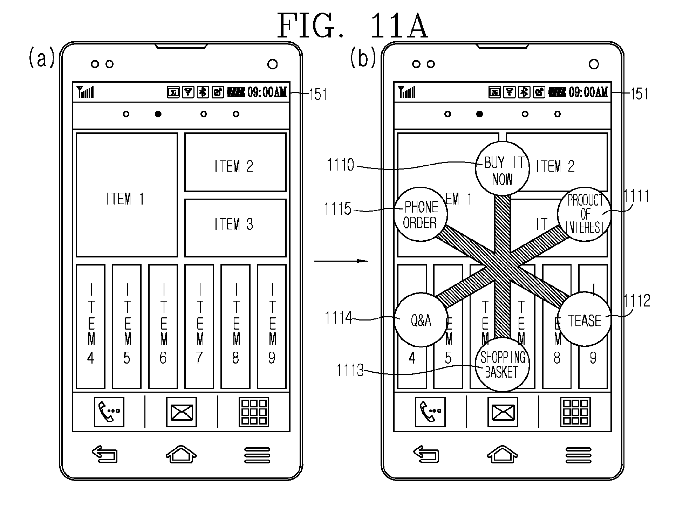

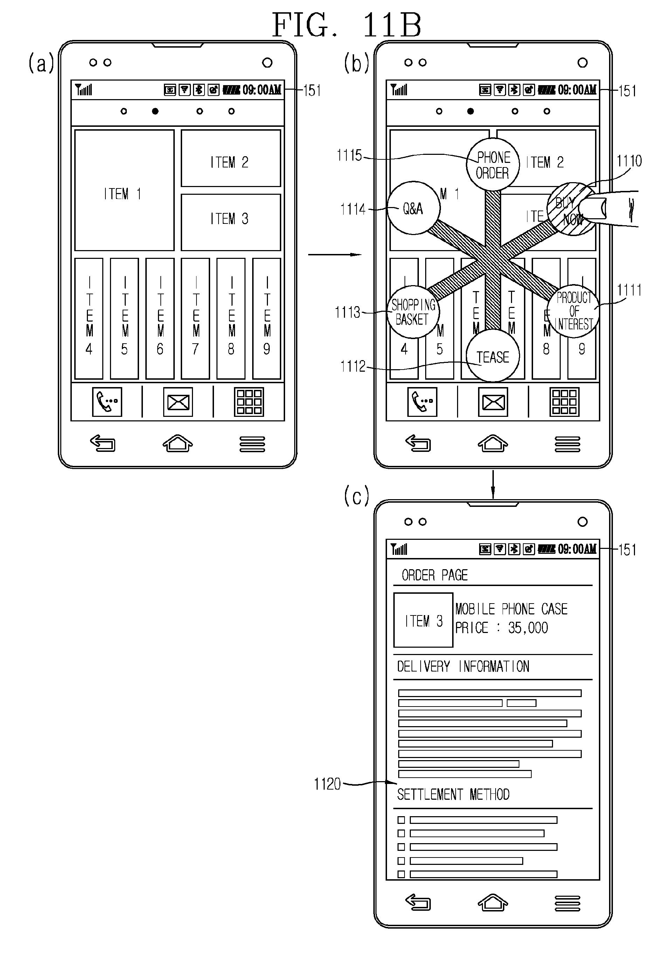

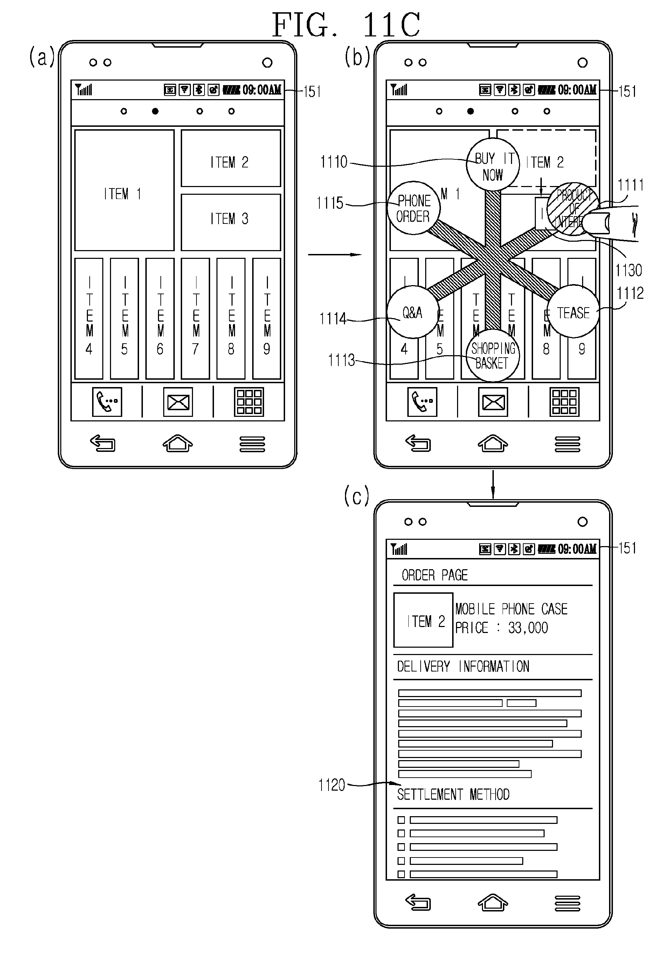

Hereinafter, a method of using a function icon for providing a shopping function on a home screen page will be described in more detail with reference to the accompanying drawings. FIGS. 11A, 11B and 11C are conceptual views for explaining a method of using a function icon to provide a shopping function on a home screen page.

In a method of providing shopping information using a mobile terminal according to an embodiment of the present disclosure and a user interface for providing shopping information using the mobile terminal, when a touch input in a preset scheme is applied to the display unit or a specific function icon is selected in a state that product information is displayed on a home screen page as illustrated in FIG. 11A(a), a plurality of function icons 1110, 1111, 1112, 1113, 1114, 1115 associated with the shopping information may be displayed on the display unit 151 as illustrated in FIG. 11A(b). The plurality of function icons 1110, 1111, 1112, 1113, 1114, 1115 may have a dial-like shape to provide a fun effect.

On the other hand, the kind of functions corresponding to a plurality of function icons may be modified and added in various ways.

Considering a method of using a plurality of function icons 1110, 1111, 1112, 1113, 1114, 1115 corresponding to a dial shape, the plurality of function icons may be rotated or moved in response to a rotation gesture (or rotational touch input) to any one of the plurality of function icons 1110, 1111, 1112, 1113, 1114, 1115 as illustrated in FIG. 11B(b) (compared to FIG. 11A(b)).

In other words, a function desired to use (for example, a function icon corresponding to "buy it now" function) may be placed to desired product information as illustrated in FIG. 11B(b), thereby activating the function as illustrated in FIG. 11 B(c).

In this case, screen information corresponding to the function may be displayed on the display unit 151.

On the other hand, when a specific function (for example, a function icon corresponding to a "buy it now" function) is placed on specific product information (for example, item 3) and then a touch input in a preset scheme, for example, long touch input, is applied to a function icon corresponding to the specific function as illustrated in FIG. 11 B(b), the controller 410 may activate the specific function. It is to distinguish a touch input for moving a function icon from a touch input for selecting a specific function.

On the other hand, for another example, referring to FIG. 11 C(b), when a plurality of function icons 1110, 1111, 1112, 1113, 1114, 1115 corresponding to a dial shape are displayed and then specific product information, for example, item 2, is moved to a specific function icon, the controller 410 may display screen information 1120 corresponding to a function corresponding to the specific function icon (for example, "product of interest" icon).

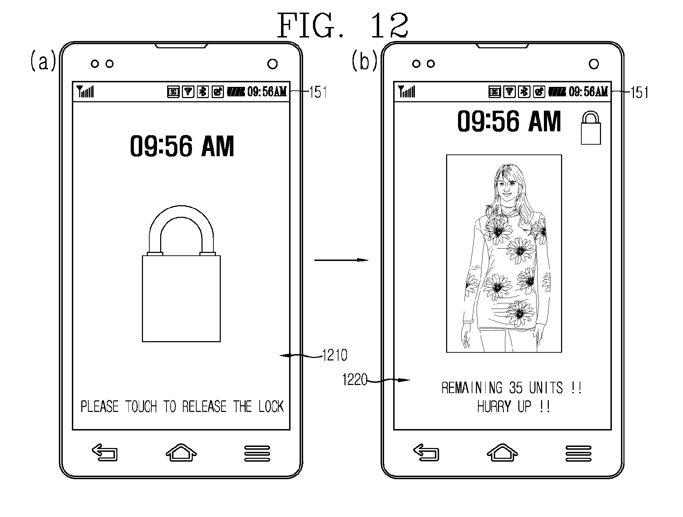

Hereinafter, a method of providing shopping information using a lock screen will be described in more detail with reference to the accompanying drawings. FIG. 12 is a conceptual view for explaining a method of providing shopping information in a lock state.

A method of providing shopping information using a mobile terminal according to an embodiment of the present disclosure and a user interface for providing shopping information using the mobile terminal may display at least one product information on a lock screen displayed on the display unit 151 in a lock state when the lock state is implemented.

Here, the lock state is a state in which the input of a user's control command to applications included in the mobile terminal is restricted. It is to prevent the functions and applications of the mobile terminal from being activated or deactivated when a user's unintentional control command is entered in a mobile terminal mainly provided with a touch screen (or display unit 151 formed with a touch screen). Accordingly, in the lock state, the input of a user's control command entered through the touch screen (or display unit 151) and other user input units 130 may be limited within a set range.

On the other hand, though the input of a user's control command is restricted in the lock state, the operations of the functions and applications of the mobile terminal that have been operated prior to implementing the lock state may be continuously carried out. Furthermore, the release state is a state in which the input of a user's control command to the mobile terminal is not restricted. Accordingly, in the release state, the functions and applications of the mobile terminal is activated or deactivated according to a control command entered by the user through the touch screen (or display unit 151) or user input unit 130.

Here, the lock state can be carried out when a user's input is not sensed for a set period of time to the touch screen (or display unit 151) and other user input units 130 provided in the mobile terminal. The set period of time may be changed according to the user's setting.

Furthermore, the lock state may be carried out when a specific key (for example, hold key) provided in the mobile terminal, which has been previously set for the lock state, is pressed by the user.

On the other hand, the controller 410 may control the lock screen based on shopping information received through the wireless communication unit 420.

For an example, when shopping information for displaying product information on a lock screen is received while displaying a typical lock screen 1210 in which product information is not output as illustrated in FIG. 12A, the product information may be displayed on a lock screen 1220 as illustrated in FIG. FIG. 12B.

In other words, the controller 410 may display product information on a lock screen only when a kind of event information is received from the shopping information providing server. The product information displayed on the lock screen may be associated with a product for which an event that should be recognized by the user for at least one of a user's product of interest and a product contained in the shopping basket has occurred.

On the other hand, even though event information is not received, at least one product information may be continuously displayed on the lock screen.

Furthermore, though not shown in the drawing, at least one function icon capable of performing a function associated with the at least one product information, respectively, may be displayed on the lock screen along with the at least one product information.

For example, a function corresponding to the at least one function icon may be an "add to basket" function, a "buy it now" function, a "phone order" function, and the like.

On the other hand, even though the lock state is carried out, the reception of a control command may be exceptionally allowed for the at least one function icon.

As described above, a method of providing shopping information using a mobile terminal according to an embodiment of the present disclosure and a user interface for providing shopping information using the mobile terminal may more effectively provide information on a product in which the user shows interest when shopping information is provided through a lock screen.

Furthermore, a method of providing shopping information using a mobile terminal according to an embodiment of the present disclosure and a user interface for providing shopping information using the mobile terminal may provide shopping information received through an external server on a home screen page. Accordingly, the user may reduce burdensomeness, such as implementing an additional application or accessing the Internet to use shopping information.

Furthermore, a method of providing shopping information using a mobile terminal according to an embodiment of the present disclosure and a user interface for providing shopping information using the mobile terminal may provide a function of directly purchasing a product through a home screen page, thereby enhancing the convenience of the user's shopping method.

On the other hand, a method of providing shopping information using a mobile terminal according to an embodiment of the present disclosure may be provided in the form of an application on the mobile terminal, and when such an application is installed therein, a function icon for installing at least one affiliated application according to the service provider's request may be provided at the same time in addition to the application.

Furthermore, according to an embodiment disclosed in the present disclosure, the foregoing method may be implemented as codes readable by a computer on a medium written by the program. The computer-readable media may include all kinds of recording devices in which data that can be read by a computer system is stored. Examples of the computer-readable media may include ROM, RAM, CD-ROM, magnetic tape, floppy disk, and optical data storage device, and the like, and also include a device implemented via a carrier wave (for example, transmission via the Internet). In addition, the computer may include the controller 180 of the terminal.

The configurations and methods according to the above-described embodiments will not be applicable in a limited way to the foregoing user interface, and all or part of each embodiment may be selectively combined and configured to make various modifications thereto.

## Claims

1. A method of providing shopping information using a mobile terminal, the method comprising:
receiving shopping information using a wireless communication unit;
displaying first shopping information corresponding to at least part of the shopping information on a first home screen page displayed on a display unit;
outputting detailed information corresponding to at least part of the first shopping information or switching the first home screen page displayed on the display unit to a second home screen page different from the first home screen page according to the scheme of a touch input to the display unit, and outputting either one of user setting information on the second home screen page and second shopping information corresponding to at least part of the shopping information and different from the first shopping information on the second home screen page.

2. The method of claim 1, wherein the first shopping information comprises at least one shopping information, and
the first home screen page comprises at least one item to display the at least one shopping information, and
the at least one shopping information is disposed to correspond to the at least one item, respectively.

3. The method of claim 2, wherein the number of items contained in the first home screen page is changed according to the number of product information contained in the first shopping information.

4. The method of claim 3, wherein the size of items contained in the first home screen page varies based on the priority of product information to be disposed at the item.

5. The method of claim 4, wherein information associated with the priority of product information to be disposed at the item contained in the first home screen page is contained in shopping information received using the wireless communication unit.

6. The method of claim 2, wherein event information contained in shopping information sequentially or simultaneously received through the wireless communication unit is overlapped with at least one of the at least one item.

7. The method of claim 2, wherein a plurality of function icons corresponding to different functions, respectively, are displayed on the first home screen page, and
a function corresponding to any one of the plurality of function icons is implemented based on any one of the plurality of function icons being moved to any one of the at least one item or any one of the at least one item being moved to any one of the plurality of function icons.

8. The method of claim 1, wherein shopping information received using the wireless communication unit comprises at least one of product information, the layout information of the product information, the priority information of the product information, and event information corresponding to the product information, and
the shopping information is received from a preset external server through the wireless communication unit.

9. The method of claim 2, wherein the detailed information of the product information disposed at the any item is displayed when a touch input in a preset scheme is applied to any one of the at least one item contained in the first home screen page, and
the detailed information comprises at least one detailed item that can be selected associated with the product information.

10. The method of claim 9, wherein the detailed information comprises a settlement function icon capable of purchasing a product corresponding to the product information, and
detailed information corresponding to a detailed item selected by the user among the at least one detailed item is transmitted to a preset external server when the settlement function icon is selected.

11. The method of claim 1, wherein when a touch input in a preset scheme is applied to any one of the at least one item contained in the first home screen page, at least one of at least one share function icon corresponding to a function of transmitting product information disposed at the any item to an external terminal and a shopping basket function icon for allowing product information disposed at the any item to be contained in a shopping basket database is output.

12. The method of claim 1, wherein the first home screen page is any one of a plurality of home screen pages, and
a plurality of objects corresponding to the plurality of home screen pages, respectively, for allowing the plurality of home screen pages to be identified are displayed on the first home screen page, and
a plurality of thumbnail images corresponding to the plurality of home screen pages, respectively, are displayed when a touch input in a preset scheme is applied to any one of the plurality of objects.

13. The method of claim 12, wherein the plurality of thumbnail images correspond to any one of representative product information, category information and shopping mall information of the plurality of home screen pages.

14. The method of claim 1, wherein the first home screen page is any one of a plurality of home screen pages, and
the plurality of home screen pages form a matrix structure consisting of at least one row and column.

15. The method of claim 14, wherein information corresponding to the same attribute is displayed on at least one home screen page corresponding to the same column.

16. The method of claim 15, wherein the second home screen page is switched to a third home screen page, and user setting information different from user setting information displayed on the second home screen page is contained on the third home screen page when a touch input for moving the second home screen page in the column direction is applied in a state that user setting information is displayed on the second home screen page , and
the second home screen page is switched to a third home screen page, and third shopping information different from second shopping information displayed on the second home screen page is contained on the third home screen page when a touch input for moving the second home screen page in the column direction is applied in a state that second shopping information is displayed on the second home screen page.

17. The method of claim 15, wherein shopping information with different attributes are contained in home screen pages corresponding to different columns when home screen pages containing shopping information form a plurality of columns in the matrix structure.

18. The method of claim 17, wherein the shopping information with different attributes are associated with at least one of the shopping mall and product category.

19. The method of claim 1, further comprising:
implementing a lock state for restricting the input of a control command to the display unit,
wherein at least one product information is displayed on a lock screen displayed in the lock state based on shopping information received using the wireless communication unit.

20. A user interface for providing shopping information using a mobile terminal, the user interface comprising:
a wireless communication unit configured to communicate with an external server providing shopping information;
a display unit formed to display visual screen information; and
a controller configured to control the display unit to contain shopping information corresponding to at least part of the shopping information on a home screen page displayed on the display unit among a plurality of home screen pages,
wherein shopping information and the number thereof contained in the plurality of home screen pages are controlled based on the shopping information.

21. The user interface of claim 20, wherein the controller controls the display unit to switch a first home screen page displayed on the display unit to a second home screen page different from the first home screen page according to the scheme of a touch input to the display unit, and display either one of user setting information on the second home screen page and second shopping information corresponding to at least part of the shopping information and different from the first shopping information on the second home screen page.

22. The user interface of claim 21, wherein the user setting information comprises a graphic object corresponding to at least one of the icon and widget of an application selected by the user.

23. The user interface of claim 21, wherein the layout of the first and the second shopping information contained in the first and the second home screen page, respectively, is not changed in response to the user's control command.

24. The user interface of claim 20, wherein the controller controls the shopping information being received based on at least one of the wireless communication status and charge information of the mobile terminal.

25. The user interface of claim 20, further comprising:
a monitoring unit configured to monitor use information associated with the use of the mobile terminal,
wherein the controller controls the wireless communication unit to transmit information monitored through the monitoring unit to an external server transmitting the shopping information.

26. The user interface of claim 25, wherein the use information comprises at least one of time information during which the mobile terminal is mainly used and product information selected by the user from the first and the second shopping information.
